# EUROPÄISCHE PATENTANMELDUNG

(11) **EP 4 596 155 A1**
(43) Veröffentlichungstag der Anmeldung: **06.08.2025**
(21) Anmeldenummer: 25153373.3
(22) Anmeldetag: 22.01.2025
(51) Int. Cl.: B23F 23/12, B24B 53/00, B24B 53/075

(54) **VERFAHREN ZUR VORPROFILIERUNG EINES SCHLEIFWERKZEUGS**

(30) Priorität: 30.01.2024 CH 1062024
(71) Anmelder: Reishauer AG, 8304 Wallisellen (CH)
(72) Erfinder: Pavlovic, Marin, 8306 Brüttisellen (CH); Weibel, Reto, 9230 Flawil (CH)
(74) Vertreter: Keller Schneider Patent- und Markenanwälte AG

(57) **Zusammenfassung**

In einem Verfahren zur Vorprofilierung eines Schleifwerkzeugs wird eine Vorrichtung, insbesondere eine Verzahnungsschleifmaschine (1), zur Hartfeinbearbeitung von Werkstücken sowie zur Vorprofilierung von Schleifwerkzeugen bereitgestellt, die eine Werkstückspindel (2) zum Rotieren eines Werkstücks, eine mindestens entlang einer X-Schleifspindelzustellachse zustellbare Schleifspindel (3) zum Rotieren eines Schleifwerkzeugs, insbesondere einer Schleifschnecke (4) oder einer Schleifscheibe und eine Profiliereinrichtung (5) mit einer stehenden ersten Profilierplatte (6) umfasst. Es wird an der Schleifspindel (3) der Vorrichtung ein Schleifwerkzeugrohling bereitgestellt, insbesondere ein Schleifschneckenrohling. Die Vorrichtung wird in eine Profilierkonfiguration gebracht. Die Schleifspindel (3) wird zugestellt bis der Schleifwerkzeugrohling mit der ersten Profilierplatte (6) in Wirkverbindung steht. Schliesslich wird der Schleifwerkzeugrohling vorprofiliert.

## Beschreibung

### Technisches Gebiet

Die Erfindung betrifft ein Verfahren zur Vorprofilierung eines Schleifwerkzeugs und eine Vorrichtung zur Hartfeinbearbeitung von Werkstücken sowie zur Profilierung von Schleifwerkzeugen.

### Stand der Technik

Bei der Hartfeinbearbeitung von Werkstücken, z. B. Zahnradrohlingen, werden diese mit Schleifwerkzeugen wie Schleifscheiben oder Schleifschnecken bearbeitet. Ein vorteilhaftes Verfahren ist das Wälzschleifen mittels Verzahnungsschleifmaschinen. Dabei kommt es darauf an, dass die verwendeten Schleifwerkzeuge ein Profil aufweisen, welches exakt zur gewünschten Profilform des Werkstücks passt. Dies wird unter anderem durch das entsprechende Profilieren eines Werkzeugrohlings erreicht. Das Profilieren schliesst eine Vorprofilierung zum Erhalten des benötigten Grobprofils sowie eine Abrichtung zur Feinprofilierung ein. Üblicherweise geschieht das Vorprofilieren von Schleifwerkzeugrohlingen einmalig an dafür designierten Profiliermaschinen wie z. B. Rundschleifmaschinen, während das Abrichten auf der Verzahnungsschleifmaschine, z. B. einer Wälzschleifmaschine, erfolgt und nach einer gewissen Einsatzzeit periodisch wiederholt wird. Zum Vorprofilieren wird z.B. ein Zeilenabrichten mit Radiusprofilrollen durchgeführt, welches zwar eine relativ hohe Flexibilität bietet, allerdings einen hohen Zeitaufwand bedeutet. Besonders rotierende Abrichtwerkzeuge haben auch den Nachteil, dass es, z. B. bei unsachgemässer Verwendung, leicht zu Schäden am Schleifwerkzeugrohling kommt.

Üblicherweise wird das Vorprofilieren daher nicht vom Anwender der Schleifmaschinen, insbesondere der Wälzschleifmaschinen, selber vorgenommen, sondern durch Zulieferer, die über entsprechende Maschinen verfügen. Der Anwender erwirbt bereits vorprofilierte Schleifwerkzeuge und lagert diese für zukünftige Einsätze. Dies schränkt ihn in seiner Flexibilität ein und bedeutet eine finanzielle Belastung, da der Abnehmer seinen Bedarf an profilierten Schleifwerkzeugen vorabschätzen muss.

Aus dem Stand der Technik ist es bekannt, zur Vorprofilierung einen sogenannten Abrichtmeister zu verwenden. Hierbei handelt es sich insbesondere um ein Diamantwerkzeug, welches in seiner Form der gewünschten Profilform des zu bearbeitenden Werkstücks entspricht. Ein solcher Abrichtmeister kann dann z.B. auch in eine Schleifmaschine, insbesondere so wie ein Werkstück, eingespannt und in Wirkverbindung mit einem Schleifwerkzeugrohling gebracht werden. Hierdurch wird in den Schleifwerkzeugrohling ein Profil eingetragen, welches einem Negativ des Profils des Abrichtmeisters entspricht.

Nachteilig bei dieser Verfahrensart ist aber wiederum, dass sie relativ unflexibel ist. Für jede Werkstückform wird ein entsprechender Abrichtmeister benötigt. Ausserdem bestehen Probleme bei der Erzeugung von Profilen, die vergleichsweise kleinen Werkstücken, z. B. mit einem Modul < 1 mm, entsprechen.

### Darstellung der Erfindung

Aufgabe der Erfindung ist es, ein dem eingangs genannten technischen Gebiet zugehörendes Verfahren zu schaffen, welches ein flexibles und bedarfsorientiertes Vorprofilieren von Schleifwerkzeugen mit einer Vorrichtung ermöglicht, die auch zur Hartfeinbearbeitung von Werkstücken geeignet ist.

Die Lösung der Aufgabe ist durch die Merkmale des Anspruchs 1 definiert. Gemäss der Erfindung umfasst ein Verfahren zur Vorprofilierung eines Schleifwerkzeugs die Schritte:
a) Bereitstellen einer Vorrichtung, insbesondere einer Verzahnungsschleifmaschine, zur Hartfeinbearbeitung von Werkstücken sowie zur Vorprofilierung von Schleifwerkzeugen umfassend:
   a. eine Werkstückspindel zum Rotieren eines Werkstücks;
   b. eine mindestens entlang einer X-Schleifspindelzustellachse zustellbare Schleifspindel zum Rotieren eines Schleifwerkzeugs, insbesondere einer Schleifschnecke oder einer Schleifscheibe, und
   c. eine Profiliereinrichtung mit einer stehenden ersten Profilierplatte.
b) Bereitstellen eines Schleifwerkzeugrohlings, insbesondere eines Schleifschneckenrohlings, an der Schleifspindel der Vorrichtung.
c) Bringen der Vorrichtung in eine Profilierkonfiguration.
d) Zustellen der Schleifspindel bis der Schleifwerkzeugrohling mit der ersten Profilierplatte in Wirkverbindung steht.
e) Vorprofilieren des Schleifwerkzeugrohlings.

Ein weiterer Aspekt der Erfindung ist eine Vorrichtung, insbesondere Verzahnungsschleifmaschine, zur Hartfeinbearbeitung von Werkstücken sowie zur Profilierung von Schleifwerkzeugen, insbesondere mit einem erfindungsgemässen Verfahren, umfassend:
a) eine Werkstückspindel zum Rotieren eines Werkstücks;
b) eine mindestens entlang einer X-Schleifspindelzustellachse zustellbare Schleifspindel zum Rotieren eines Schleifwerkzeugs, insbesondere einer Schleifschnecke oder einer Schleifscheibe, wobei die Vorrichtung eine Werkstückbearbeitungskonfiguration hat, bei der die Schleifspindel entlang der X-Schleifspindelzustellachse zur Werkstückspindel zustellbar ist, bis ein auf der Schleifspindel befindliches Schleifwerkzeug mit einem auf der Werkstückspindel befindlichen Werkstück in Wirkverbindung steht und
c) eine Profiliereinrichtung, umfassend eine stehende erste Profilierplatte, wobei die Vorrichtung eine erste Profilierkonfiguration hat, bei der die Schleifspindel zur Profiliereinrichtung zustellbar ist, bis das auf der Schleifspindel befindliche Schleifwerkzeug mit der ersten Profilierplatte in Wirkverbindung steht.

Mit einem Werkstück ist hier insbesondere ein Zahnradrohling gemeint, der noch durch eine Hartfeinbearbeitung wie das Wälzschleifen bearbeitet werden muss, um als Zahnrad z. B. in einem Getriebe einsetzbar zu sein. In der Regel bestehen solche Werkstücke aus Metall, z. B. gehärtetem Stahl.

Ein Schleifwerkzeug, insbesondere eine Schleifschnecke oder eine Schleifscheibe, ist im Kontext der Erfindung ein Werkzeug, welches zur Hartfeinbearbeitung von Werkstücken geeignet ist. Insbesondere bestehen solche Schleifwerkzeuge aus einem formgebenden und bindenden Medium sowie aus in dem Medium gebundenen Körnern, die in der Regel härter sind, als das Material des zu bearbeitenden Werkstücks. Bei dem Medium kann es sich um Keramik handeln, während die Körner z. B. aus Schmelz- oder Sinterkorund bestehen.

Zur geeigneten Hartfeinbearbeitung eines Werkstücks weisen Schleifwerkzeuge ein Profil auf, welches einem Negativ der angestrebten Profilform eines Werkstücks entspricht. Bei Schleifschnecken windet sich dieses Profil spiralförmig um die Aussenseite der Schleifschnecke, so dass diese im Querschnitt mehrere Zähne, ähnlich eines Zahnrads, aufweist. Bei einer Schleifscheibe wiederum, entspricht das Profil lediglich der Form eines Teilungsprofils des fertigen Zahnrads, also einer linken Zahnflanke, einem Fussbereich und einer rechten Zahnflanke bzw. einem Negativ davon.

Ein Schleifwerkzeugrohling ist ein Rohling des Schleifwerkzeugs, und wird erst durch ein Einbringen eines Profils zu einem geeigneten Werkzeug.

Mit dem Bereitstellen einer entsprechenden Vorrichtung, insbesondere einer Verzahnungsschleifmaschine, bevorzugt einer Wälzschleifmaschine, wird diese Vorrichtung für den Rest des Verfahrens einsatzfähig zur Verfügung gestellt. Erfindungsgemäss handelt es um eine Vorrichtung mit den oben genannten Merkmalen:
Die Werkstückspindel dient dazu, Werkstücke während einer Hartfeinbearbeitung zu rotieren. Beim Wälzschleifen geschieht dies kontinuierlich, während das Werkstück sich mit einer Schleifschnecke, ähnlich einem Schneckengetriebe, in Wirkverbindung befindet. Wird eine Schleifscheibe verwendet, z. B. beim Teilungsprofilschleifen, so wird das Werkstück nur weitergedreht, solange sich Schleifscheibe und Werkstück nicht in Eingriff befinden.

Die Schleifspindel hält und rotiert ein Schleifwerkzeug. In der Regel ist ihre Schleifspindelrotationsachse zur Werkstückrotationsachse der Werkstückspindel, insbesondere im Winkel von 90°, geneigt, dabei aber verkippbar. Die Schleifspindel rotiert das Schleifwerkzeug mit einer Rotationsgeschwindigkeit, die dem jeweiligen Schleifvorgang oder Profiliervorgang angepasst ist.

Dabei ist die Schleifspindel mindestens entlang einer X-Schleifspindelzustellachse zustellbar. Mit anderen Worten ist sie also zu einem auf der Werkstückspindel befindlichen Werkstück fahrbar, um ein Schleifwerkzeug mit dem Werkstück in Wirkverbindung zu bringen. Dazu ist die Schleifspindel insbesondere an einem beweglich gelagerten Schleifschlitten angeordnet.

Die X-Schleifspindelzustellachse ist insbesondere eine Bewegungsachse, die orthogonal zur Rotationsachse der Schleifspindel sowie ebenfalls orthogonal zur Rotationsachse der Werkstückspindel verläuft. Bevorzugterweise verläuft die X-Schleifspindelzustellachse horizontal.

Die erfindungsgemässe Profiliereinrichtung ist dazu geeignet, einen Schleifwerkzeugrohling vorzuprofilieren. Dazu umfasst sie zwingend mindestens eine stehende erste Profilierplatte. Dass die erste Profilierplatte steht, bedeutet, dass sie während eines Profiliervorgangs nichtdrehend fixiert ist und sich währenddessen nicht um eine Rotationsachse, insbesondere eine Rotationsachse, die parallel und/oder orthogonal zur Schleifspindelrotationsachse verläuft, drehen kann. Dabei ist die erste Profilierplatte plattenförmig. In der Richtung, welche parallel zur Schleifspindelrotationsachse verläuft, ist die erste Profilierplatte in einem Eingriffsbereich insbesondere weniger breit, als die Zahndicke der Zahnräder, für die der Schleifwerkzeugrohling vorgesehen ist. Insbesondere weist die Profilierplatte eine maximale Länge auf, die geringer ist, als z. B. der geringste Durchmesser der Werkstückspindel.

Die erste Profilierplatte ist - im Gegensatz zu beispielsweise Schleifscheiben - insbesondere auch nicht rotationssymmetrisch bei Rotationen um Achsen, die orthogonal zu einer ihrer Hauptflächen liegen und durch die erste Profilierplatte hindurchtreten. Insbesondere ist die erste Profilierplatte in einem distalen Bereich, der während des Vorprofilierens (siehe unten) zur Schleifspindel weist, pfeil- oder dreiecksförmig, mit einer Spitze, die zur Schleifspindel weist. Bevorzugterweise ist die erste Profilierplatte, zumindest in der Profilierkonfiguration der Vorrichtung, so ausgerichtet, dass Ihre Hauptflächen horizontal liegen.

Die erste Profilierplatte besteht insbesondere aus einem Material oder umfasst ein Material, das härter ist als gehärteter Stahl, z. B. Diamant (siehe unten).

Beim Bereitstellen eines Schleifwerkzeugrohlings an der Schleifspindel wird der Schleifwerkzeugrohling so an der Schleifspindel angeordnet, dass die Schleifspindel diesen rotieren kann. Insbesondere wird der Schleifwerkzeugrohling also so angebracht, wie auch ein bereits fertig profiliertes Schleifwerkzeug an der Vorrichtung angebracht würde, um ein Werkstück zu bearbeiten.

Das Bringen der Vorrichtung in eine Profilierkonfiguration beinhaltet alle Schritte, die die Vorrichtung in eine Konfiguration (die erste Profilierkonfiguration) bringen, bei der die Schleifspindel zur Profiliereinrichtung zustellbar ist, bis der Schleifwerkzeugrohling mit der ersten Profilierplatte in Wirkverbindung steht. Damit ist insbesondere gemeint, dass die erste Profilierplatte zur Schleifspindel ausgerichtet wird. Alternativ oder zusätzlich kann es, abhängig von der konkreten Vorrichtung, auch bedeuten, dass die Schleifspindel z. B. entlang einer Z-Schleifspindelachse auf eine geeignete vertikale Höhe, insbesondere die vertikale Höhe der Profiliereinrichtung, gefahren wird. Auch kann es das Entfernen eines Schutzes von der Profiliereinrichtung, z. B. das Öffnen einer Schutzhaube, oder ein Ausklappen der Profiliereinrichtung, beinhalten. Ebenso bedeutet das Einnehmen der Profilierkonfiguration, dass die erste Profilierplatte so fixiert wird (falls dies vorher nicht der Fall war), dass sie nicht frei beweglich und/oder drehbar ist. Gerade z. B. bei Vorrichtungen, bei denen die Werkstückspindel, insbesondere neben einem Trägerturm, auf einer beweglichen Basis angeordnet ist, beinhaltet das Bringen der Vorrichtung in die Profilierkonfiguration auch eine geeignete Drehung bzw. Ausrichtung dieser Basis (siehe unten).

Das Zustellen kann dabei entlang der X-Schleifspindelzustellachse erfolgen. Es ist auch möglich, dass eine Zustellachse zur Profiliereinrichtung von der X-Schleifspindelzustellachse abweicht und z. B. zu dieser orthogonal ist und das Zustellen z. B. vertikal nach oben erfolgt. Insbesondere kann das Zustellen auch entlang einer zur Schleifspindelachse parallelen Y-Schleifspindelachse erfolgen. In diesem Fall wird der Schleifwerkzeugrohling zunächst relativ zur ersten Profilierplatte, z. B. durch bewegen entlang der X-Schleifspindelzustellachse, so positioniert, dass eine, zur Schleifspindelachse parallele Gerade existiert, die sowohl durch die Spitze der ersten Profilierplatte verläuft, als auch durch einen äusseren Bereich des Schleifwerkzeugrohlings.

Das Vorprofilieren des Schleifwerkzeugrohlings beinhaltet ein Zustellen der Schleifspindel mit dem Schleifwerkzeugrohling zur Profiliereinrichtung, bis der Schleifwerkzeugrohling mit der ersten Profilierplatte in Wirkverbindung steht. Ausserdem beinhaltet es, dass die Schleifspindel den Schleifwerkzeugrohling in Rotation versetzt. Während der Rotation des Schleifwerkzeugrohlings ergibt sich aufgrund von dessen Zusammenwirken mit der ersten Profilierplatte ein Materialabtrag. Dies führt zur Profilierung, insbesondere der Vorprofilierung, des Schleifwerkzeugrohlings. Bevorzugt beinhaltet das Vorprofilieren noch weitere Bewegungen der Schleifspindel, so z. B. Bewegungen in der zur Schleifspindelrotationsachse parallelen Y-Schleifspindelachse. Bei einem Schleifschneckenrohling wird z. B. noch, passend zur Rotationsgeschwindigkeit, die Schleifspindel, insbesondere entlang der Y-Schleifspindelachse, so an der Profiliereinrichtung entlang gefahren, dass der Abtrag sich in der gewünschten Weise spiralförmig um den Schleifwerkzeugrohling wickelt. Weitere Details zu dieser Variante folgen weiter unten im Text.

Bei einem Schleifscheibenrohling wiederum, wird die Schleifspindel, wenn überhaupt, nur so bewegt, dass der Abtrag eine gewünschte Profilform erzeugt.

Vorteil des erfindungsgemässen Verfahrens sowie der erfindungsgemässen Vorrichtung ist es, dass ein Schleifwerkzeugrohling mit derselben Vorrichtung vorprofiliert werden kann, mit der dann auch eine Hartfeinbearbeitung eines Werkstücks durchführbar ist. Damit ist es einem Anwender dieser Vorrichtung z. B. möglich, Schleifwerkzeugrohlinge vorzuhalten und je nach Bedarf vorzuprofilieren, um diese in anschliessenden Hartfeinbearbeitungen als Schleifwerkzeuge einzusetzen. Es werden auch keine für jede Zahnradform spezifische Abrichtmeister benötigt. Dies erlaubt eine besonders flexible und bedarfsorientierte Vorprofilierung.

Zudem kann unter Verwendung der ersten Profilierplatte schneller profiliert werden, da diese einen hohen Abrieb erzeugt. Auch kann die Profilierung trocken geschehen, also insbesondere ohne Zugabe von Kühlöl. Damit wird das Verfahren besonders einfach.

Ein weiterer Vorteil ist die Möglichkeit, mit dem Verfahren und/oder der Vorrichtung Profile zu erzeugen, die in der Lage sind, feinere Verzahnungen zu schleifen. Insbesondere können so auf einfache, flexible und bedarfsorientierte Weise Schleifwerkzeuge vorprofiliert werden, die für das Schleifen von Zahnrädern mit Modul < 1, insbesondere bis Modul 0.5, geeignet sind. Dies führt zu einem besonders flexiblen und universellen Verfahren und einer ebenso besonders flexiblen und universellen Vorrichtung.

Bevorzugterweise umfasst das Bringen der Vorrichtung in die Profilierkonfiguration ein Bewegen der ersten Profilierplatte, insbesondere ein Schwenken der ersten Profilierplatte, entlang einer Kreisbahn in eine Schleifwerkzeugbearbeitungsposition. Die Schleifwerkzeugbearbeitungsposition ist dabei eine Position, die die erste Profilierplatte in der Profilierkonfiguration aufweist und insbesondere während eines vollständigen Profiliervorgangs beibehält. Das Bewegen kann dabei z.B. geradlinig horizontal erfolgen oder auch z. B geradlinig vertikal. Bevorzugt erfolgt es horizontal entlang einer Kreisbahn. Dabei kann die erste Profilierplatte z. B. entlang einer vertikalen Schwenkachse geschwenkt werden, die ausserhalb der ersten Profilierplatte liegt, besonders bevorzugt auch ausserhalb der Profiliereinrichtung. Die Profilierplatte kann aber auch entlang einer horizontal verlaufenden Schwenkachse in die Schleifwerkzeugbearbeitungsposition geschwenkt werden. Ein Bewegen der ersten Profilierplatte in die Schleifwerkzeugbearbeitungsposition erlaubt es, die Vorrichtung auf einfache und sehr schnelle Weise in eine Profilierkonfiguration zu bringen. Die Profiliereinrichtung und die erste Profilierplatte kann, bezogen auf andere Komponenten der Vorrichtung, vergleichsweise kompakt ausgeführt werden, und ein Bewegen der ersten Profilierplatte ist damit einfach umsetzbar und kann insbesondere schnell erfolgen.

Alternativ kann das Bringen der Vorrichtung in die Profilierkonfiguration auch ohne Bewegung der ersten Profilierplatte geschehen, z. B. über ein Bewegen der Schleifspindel, oder dadurch, dass z. B. in einer anderen als der X-Schleifspindelzustellachse zur Profiliereinrichtung zugestellt wird.

In einer bevorzugten Variante der vorgenannten Varianten der Erfindung umfasst das Bringen der Vorrichtung in die Profilierkonfiguration ein Bewegen der Schleifspindel entlang einer Z-Schleifspindelachse, welche parallel zu einer Werkstückrotationsachse verläuft, in eine Schleifspindelprofilierhöhe. Damit ist ein Bewegen der Schleifspindel vor dem Zustellen zur Profiliereinrichtung gemeint. Dadurch wird ein Verfahren geschaffen, das auch bei Profiliereinrichtungen anwendbar ist, die z. B. auf einer anderen Höhe an der Vorrichtung angeordnet sind, als ein auf der Werkstückspindel befindliches Werkstück. Insbesondere kann so eine Vorrichtung verwendet werden, bei der die Profileireinrichtung sich oberhalb des Einspannbereichs der Werkstückspindel oder unterhalb des Einspannbereichs der Werkstückspindel befindet. Ein solches Verfahren erlaubt auch eine fest, also unbeweglich angeordnete Profiliereinrichtung, die nur in der vertikalen Höhe von der Werkstückspindel beabstandet ist. Damit wird das Verfahren besonders flexibel.

Alternativ kann das Verfahren auch ohne Bewegung entlang der Z-Schleifspindelachse durchgeführt werden, z. B. wenn die Profiliereinrichtung in der Profilierkonfiguration auf derselben Höhe liegt, wie ein auf der Werkstückspindel befindliches Werkstück, oder wenn die Zustellachse zur Profiliereinrichtung eine andere ist, als die X-Schleifspindelzustellachse.

In einer bevorzugten Ausführung aller oben genannten Varianten der Erfindung wird die erste Profilierplatte nach Beendigung des Vorprofilierens in eine Warteposition bewegt, in der die erste Profilierplatte sich ausserhalb eines Zustellbereichs zwischen der Schleifspindel und der Werkstückspindel befindet.

Die Warteposition ist insbesondere eine Position, bei der die erste Profilierplatte ein Zustellen der Schleifspindel zur Werkstückspindel nicht behindert und in der sie auch während eines Schleifvorgangs verbleiben kann. Der Zustellbereich umfasst z. B. den, insbesondere kleinsten, Raumbereich, der alle Positionen eines Schleifwerkzeugs beim Zustellen zur Werkstückspindel, und insbesondere auch während eines Schleifvorgangs eines Werkstücks, beinhaltet. Durch ein Bewegen der Profilierplatte in die Warteposition kann die Vorrichtung zum Abschluss des erfinderischen Verfahrens besonders schnell für eine Werkstückhartfeinbearbeitung bereitgemacht werden. Damit wird das Verfahren besonders einfach integrierbar in Abläufe, die sowohl eine Vorprofilierung eines Schleifwerkzeugs als auch eine Hartfeinbearbeitung eines Werkstücks vorsehen.

Alternativ kann die erste Profilierplatte auch nach Beendigung des Vorprofilierens unbewegt bleiben. Dies kann z. B. bei Verfahren angewandt werden, bei denen sich die Höhen der Profiliereinrichtung und einem auf der Werkstückspindel befindlichen Werkstück entlang der Z-Schleifspindelachse unterscheiden.

In einer bevorzugten Ausführung der Erfindung wird während des Vorprofilierens die Schleifspindel in einem Y-Wirkverbindungsbewegungsbereich, innerhalb dessen der auf der Schleifspindel befindliche Schleifwerkzeugrohling in Wirkverbindung mit der ersten Profilierplatte verbleibt, entlang einer Y-Schleifspindelachse bewegt, welche Y-Schleifspindelachse parallel zu einer Schleifspindelrotationsachse der Schleifspindel verläuft.

Der Y-Wirkverbindungsbewegungsbereich bezeichnet mit anderen Worten einen Bewegungsbereich, in dem sich die Schleifspindel nach dem Zustellen entlang der Y-Schleifspindelachse zur Profiliereinrichtung bewegen kann, ohne, dass das Schleifwerkzeug und die erste Profilierplatte ausser Wirkverbindung geraten. Dies kann ein ein Bereich sein, der entlang der Y- Schleifspindelachse breiter ist als die Breite des angestrebten Profils, oder dessen Breite der Breite des angestrebten Profils entspricht. Durch eine Bewegung der Schleifspindel mit dem Schleifwerkzeugrohling kann so ein spiralförmiges Profil erzeugt werden, insbesondere auf Schleifschneckenrohlingen. Diese Bewegung wird auch Shiften genannt. Insbesondere wird dabei die Breite des angestrebten Profils einmal von einer Seite bis zur anderen Seite komplett durchlaufen und die Schleifspindel danach zurückgestellt und wieder, entlang der Y-Schleifspindelachse und insbesondere auch entlang der X-Schleifspindelachse, in die Ausgangsposition gefahren. Dies kann mehrmals wiederholt werden. Insbesondere kann nach dem Zurückstellen auch eine von der Ausgangsposition abweichende Position eingenommen werden, um z. B. im neuen Durchlauf eine einer ersten Flanke eines Profils gegenüberliegende zweite Flanke zu profilieren. Die Geschwindigkeit der Bewegung entlang der Y-Schleifspindelachse ist dabei insbesondere mit der Rotationsgeschwindigkeit der Schleifspindel abgestimmt, um das gewünschte Profil zu erhalten.

Dies ermöglicht eine flexible Vorprofilierung insbesondere von Schleifschnecken, wobei übliche Bewegungsmöglichkeiten von Verzahnungsschleifmaschine, insbesondere Wälzschleifmaschinen, und typischen Schleif- und Shiftschlitten ausgenutzt werden. Auch beim Vorprofilieren von Schleifscheiben kann eine Bewegung entlang der Y-Schleifspindelachse erfolgen, um das gewünschte Profil zu erhalten.

Damit wird das Verfahren besonders einfach und universell einsetzbar und auch besonders flexibel und bedarfsorientiert.

Alternativ kann die Schleifspindel unbewegt bleiben und z. B. die Profiliereinrichtung bzw. die erste Profilierplatte verfahren werden, z. B. parallel zur Schleifspindelrotationsachse. Dies ist insbesondere eine Variante für Verzahnungsschleifmaschine, die keine Bewegungen der Schleifspindel entlang der Y-Schleifspindelachse zulassen.

In einer bevorzugten Ausführung der Erfindung berührt und stützt während des Vorprofilierens ein Klemmfuss eines Profilierplattenhalters eine Seite der ersten Profilierplatte, welche Seite im Wesentlichen eine Flächennormale aufweist, die in eine selbe Richtung weist wie die Rotationsrichtung des Schleifwerkzeugrohlings in einer lokalen Wirkverbindungsregion von Schleifwerkzeugrohling und Profilierplatte.

Der Klemmfuss des Profilierplattenhalters dient als Stütze der Profilierplatte, die insbesondere verhindert, dass die Profilierplatte durch Kräfte während der Profilierung bricht (siehe unten). Die lokale Wirkverbindungsregion ist insbesondere die Region des Schleifwerkzeugrohlings, die mit der ersten Profilierplatte in Wirkverbindung steht. Die entsprechende Rotationsrichtung ist damit insbesondere die Richtung der Kraft, die der Schleifwerkzeugrohling auf die Profilierplatte ausübt. Insbesondere handelt es sich bei der gestützten Seite um eine Hauptfläche der ersten Profilierplatte. Ein Stützen der Seite, deren Flächennormale in dieselbe Richtung weist, wirkt also dieser Kraftwirkung entgegen und verhindert insbesondere ein Verbiegen oder ein Brechen der ersten Profilierplatte während des Profiliervorgangs.

Damit wird das Verfahren besonders zuverlässig und auch nachhaltig.

Alternativ kann das Verfahren auch ohne Klemmfuss durchgeführt werden, oder der Klemmfuss anders orientiert werden. Hierbei ist es nötig, eine erste Profilierplatte zu verwenden, die die nötige Stabilität auch ohne Stützung aufweist.

In einer bevorzugten Ausführung der Erfindung wird vor dem Bringen der Vorrichtung in die Profilierkonfiguration eine Vermessung der ersten Profilierplatte durchgeführt, wobei für die Vermessung die erste Profilierplatte mit einem Taster, insbesondere nacheinander an mindestens zwei Berührungspunkten der Profilierplatte, in Berührung gebracht wird. Ein wesentlicher Faktor, der die Qualität des Ergebnisses und damit des Verfahrens beeinflusst, ist die genaue Kenntnis der Profilierplattengeometrie. Diese Kenntnis wird insbesondere benötigt, damit die beteiligten Bewegungen, wie das Zustellen und z. B. das Shiften korrekt geplant werden können. Allerdings verändert sich die Profilierplattengeometrie durch Abnutzung von der Ausgangsgeometrie während jedes Profiliervorgangs.

Eine Vermessung ist hierbei insbesondere ein Verfahren, bei dem Erkenntnisse über die Geometrie der ersten Profilierplatte gesammelt werden, insbesondere über die Geometrie der Teile der Profilierplatte, die mit dem Schleifwerkzeugrohling in Wirkverbindung treten. Der Taster, insbesondere ein Messwürfel, mit seiner insbesondere wohlbekannten Geometrie und Ausrichtung in der Vorrichtung wird z. B. über Bewegungen, die mitaufgezeichnet werden, mit der ersten Profilierplatte in Berührung gebracht. Z. B. kann durch Kenntnis der exakten Position des Tasters bei der Berührung dann die Geometrie der ersten Profilierplatte abgetastet werden. Insbesondere wird dabei der Taster bewegt, während die erste Profilierplatte unbewegt bleibt. Der Taster kann z. B. einen Berührungssensor, wie z. B. einen kapazitiven Sensor, oder ein Lasermesssystem umfassen, womit eine Berührung registriert wird. Die Berührung kann auch über Beobachtung durch eine Bedienperson, z. B. mittels einer Kamera, festgestellt werden. Bevorzugt wird der Taster nacheinander in mehreren Positionen mit der ersten Profilierplatte in Berührung gebracht. Insbesondere wird der Taster mit der äussersten, insbesondere in der Profilierkonfiguration zur Schleifspindel weisenden, Spitze der ersten Profilierplatte sowie z. B. mit zwei gegenüberliegenden Punkten an den Seiten der ersten Profilierplatte in Berührung gebracht. Natürlich kann der Taster zur Verbesserung der Auflösung noch mit mehr Orten an der ersten Profilierplatte in Berührung gebracht werden. Es hat sich in Versuchen aber gezeigt, dass insbesondere mit drei Berührungen, dabei bevorzugt eine Berührung an der äussersten Spitze der ersten Profilierplatte und jeweils eine an gegenüberliegenden Flanken der ersten Profilierplatte, ein besonders effizientes und dennoch genaues Verfahren erreicht wird.

Aus den verschiedenen Berührungsorten bzw. Positionen des Tasters kann dann die Geometrie der ersten Profilierplatte rekonstruiert werden. Bevorzugterweise wird das Ergebnis der Vermessung als Eingabe bei der Planung der Vorprofilierung, insbesondere zur Planung der Bewegungen der Schleifspindel, z. B. durch einen Schleifschlitten und/oder einen Shiftschlitten, verwendet. Das Ergebnis kann auch verwendet werden, um zu entscheiden, ob die erste Profilierplatte ausgetauscht werden sollte.

Durch diesen zusätzlichen Schritt wird ein effizientes und dennoch besonders zuverlässiges und qualitativ hochwertiges Verfahren geschaffen.

In einer besonders bevorzugten Variante des oben geschilderten Verfahrens wird vor der Vermessung der ersten Profilierplatte der Taster zur Profiliereinrichtung zugestellt, bis sich Taster und erste Profilierplatte berühren. Insbesondere wird dabei der Taster entlang der X-Schleifspindelzustellachse zugestellt.

Dies hat den Vorteil, dass zur Bewegung des Tasters in einer Verzahnungsschleifmaschine ohnehin vorhandene bewegliche Komponenten wie z. B. ein Schleifschlitten mitbenutzt werden. Insbesondere wird der Taster dazu vor dem Zustellen in eine Messkonfiguration gebracht, bei der er z. B. vor der Schleifspindel und dem Schleifwerkzeugrohling liegt. Er kann dann so zugestellt werden, wie die Schleifspindel in der Profilierkonfiguration.

Damit wird ein besonders einfaches und effizientes Verfahren geschaffen. Alternativ kann der Taster auch anders mit der ersten Profilierplatte in Berührung gebracht werden, z. B. durch Bewegen der Profiliereinrichtung oder ein Anschwenken des Tasters an die Profiliereinrichtung.

Alternativ kann auf die Vermessung auch verzichtet werden. Ein mögliches Alternativverfahren wird weiter unten im Text erläutert. Gibt es genügend Erfahrung zur Abnutzung, kann z. B. auch vorgesehen sein, die erste Profilierplatte nach einer vorgegebenen Zahl an Profiliervorgängen zu tauschen und dann mit einer neuen wohlbekannten Geometrie zu starten.

In einer bevorzugten Ausführung der Erfindung wird vor dem Bringen der Vorrichtung in eine Profilierkonfiguration oder vor dem Vorprofilieren, zur Planung des Vorprofilierens, ein digitaler Zwilling der ersten Profilierplatte abgerufen, welcher einen bisherigen Abnutzungszustand der ersten Profilierplatte repräsentiert, wobei während des Vorprofilierens oder nach dem Vorprofilieren der digitale Zwilling, insbesondere durch eine Simulation, aktualisiert wird, so dass er einen aktualisierten Abnutzungszustand der ersten Profilierplatte repräsentiert. Insbesondere kann der digitale Zwilling als Alternative zur Vermessung mit einem Taster dienen, aber auch z. B. als Ergänzung. Die Planung des Vorprofilierens beinhaltet damit insbesondere die Bestimmung der notwendigen Bewegungen, die vor und während des Profilierens vorgenommen werden, insbesondere eine Zustelldistanz, aber auch z. B. eine Shiftdistanz.

Der digitale Zwilling ist eine digitale Repräsentation der ersten Profilierplatte, die z.B. auf einer Festplatte eines PCs resp. einer Steuereinheit gespeichert ist. Insbesondere repräsentiert er die Geometrie der Profilierplatte und/oder ihren Abnutzungszustand. Er kann allerdings zusätzliche Faktoren repräsentieren, z. B. ihr Alter und ihre Zusammensetzung, z. B. ein Material aus dem die erste Profilierplatte, insbesondere ein Schneidelement der ersten Profilierplatte, besteht. Durch Abrufen des digitalen Zwillings kann insbesondere eine Geometrie ausgelesen werden, die der Geometrie der ersten Profilierplatte entspricht. Diese kann verwendet werden, um das Vorprofilieren zu planen.

Das Aktualisieren des digitalen Zwillings beinhaltet dabei insbesondere eine Simulation, z. B. eine Simulation mit einer Finite-Elemente-Methode (FEM). Dabei werden z. B. Bewegungsdaten des Vorprofilierens aus der Planung, oder aufgezeichnete Werte, als Eingabe für die Simulation verwendet. Der aktualisierte digitale Zwilling repräsentiert so die geänderte Geometrie der ersten Profilierplatte nach dem Profiliervorgang und steht für weitere Profiliervorgänge zur Verfügung.

Damit wird ein besonders effizientes und genaues Verfahren geschaffen, das auch unabhängig von Messwerten die Abnutzung von Profilierplatten miteinbezieht. Alternativ kann auf einen digitalen Zwilling auch verzichtet werden, z. B. bei der oben beschriebenen Messung.

In einer Variante der erfindungsgemässen Vorrichtung ist die Schleifspindel in der ersten Profilierkonfiguration zur Profiliereinrichtung entlang der X-Schleifspindelzustellachse zustellbar. Dies vereinfacht die Konstruktion der Vorrichtung, da dieselbe Zustellachse sowohl für das Zustellen des fertig profilierten Schleifwerkzeugs zu Werkstücken wie auch für das Zustellen des Schleifwerkzeugrohlings zur Profiliereinrichtung dient.

Alternativ kann die Zustellung auch entlang z. B. der vertikalen Z-Schleifspindelachse erfolgen, falls z. B. die Profiliereinrichtung über der Schleifspindel angeordnet ist.

Insbesondere zum Vorprofilieren von Schleifschnecken ist die Schleifspindel in einer Schleifschneckenprofilierkonfiguration zur Profiliereinrichtung entlang der Y-Schleifspindelzustellachse zustellbar. Dafür ist der Schleifwerkzeugrohling relativ zur ersten Profilierplatte, z. B. durch Bewegen entlang der X-Schleifspindelzustellachse, so positionierbar, dass eine zur Schleifspindelachse parallele Gerade existiert, die sowohl durch die Spitze der ersten Profilierplatte verläuft als auch durch einen äusseren Bereich des Schleifwerkzeugrohlings.

In einer bevorzugten Variante der Vorrichtung ist die erste Profilierplatte in eine Warteposition bewegbar, insbesondere schwenkbar, in der die erste Profilierplatte sich ausserhalb eines Zustellbereichs entlang der X-Schleifspindelzustellachse zwischen der Schleifspindel und der Werkstückspindel befindet. Die Warteposition kann sich z. B. bezogen auf die Werkstückspindel in einem der Schleifspindel gegenüberliegenden Raumbereich befinden. Sollte die Vorrichtung einen Trägerturm umfassen (siehe unten), so kann sich die Warteposition insbesondere auf einer der Werkstückspindel gegenüberliegenden Seite des Trägerturms befinden.

Durch die Beweglichkeit in die Warteposition kann die Vorrichtung zu Abschluss des erfinderischen Verfahrens besonders schnell für eine Werkstückhartfeinbearbeitung bereitgemacht werden. Damit ist die Vorrichtung besonders flexibel und erlaubt eine einfachen, zuverlässigen und schnellen Übergang von der ersten Profilierkonfiguration in eine Werkstückbearbeitungskonfiguration.

Alternativ kann die erste Profilierplatte z. B. auch unbeweglich fixiert sein. Dies kann insbesondere bei Lösungen Anwendung finden, bei denen sich die Höhe der Profiliereinrichtung entlang der Z-Schleifspindelachse einerseits und einem auf der Werkstückspindel befindlichen Werkstück andererseits unterscheiden.

In einer bevorzugten Ausführung der erfindungsgemässen Vorrichtung umfasst die Profiliereinrichtung einen schwenkbar gelagerten Schwenkarm, wobei die erste Profilierplatte an einem distalen Ende des Schwenkarms angeordnet ist.

Der Schwenkarm ist dabei insbesondere um eine Achse schwenkbar, die parallel zur Rotationsachse der Werkstückspindel, insbesondere vertikal, verläuft. Insbesondere ist der Schwenkarm im Wesentlichen quaderförmig, mit einer vertikalen Höhe, die mehr als 50% der horizontalen Länge des Schwenkarms entspricht und einer Breite, die mehr als 40% seiner Länge entspricht. Dies sorgt für eine ausreichende Stabilität des Schwenkarms, auch bei den kraftintensiven Profiliervorgängen. Die Länge des Schwenkarms, gemessen z. B. vom freien Ende bis zu seiner schwenkbaren Lagerung, beträgt insbesondere weniger als das 20-Fache einer maximalen Länge der ersten Profilierplatte.

Die Profiliervorrichtung kann zur Lagerung des Schwenkarms insbesondere auch eine Schwenkarmbasis umfassen, auf welcher Schwenkarmbasis der Schwenkarm schwenkbar gelagert ist.

Eine Profiliereinrichtung mit einem Schwenkarm hat den Vorteil, dass die erste Profilierplatte einfach ausklappbar und einklappbar an der Vorrichtung angeordnet werden kann, womit die Profiliereinrichtung in einer weniger exponierten Position in der Vorrichtung anordenbar ist. Dies verhindert Beschädigungen der ersten Profilierplatte z. B. bei Nebenbearbeitungen oder beim Schwenken der gesamten Profiliervorrichtung. Damit wird es möglich, eine insgesamt kompaktere Vorrichtung zu konstruieren. Ausserdem kann durch Verschwenken des Schwenkarms die erste Profilierplatte flexibel zur Schleifschnecke ausgerichtet bzw. die Ausrichtung angepasst werden, so dass auf einfache Weise verschiedene Profilflankengeometrien erzeugbar sind.

Alternativ kann die Profiliereinrichtung auch ohne Schwenkarm ausgeführt sein, wenn z. B. ausreichend Platz zur Verfügung steht.

In einer bevorzugten Ausführung der erfindungsgemässen Vorrichtung ist die Schleifspindel entlang einer Y-Schleifspindelachse bewegbar, welche Y-Schleifspindelachse parallel zu einer Schleifspindelrotationsachse der Schleifspindel, und insbesondere orthogonal zur X-Schleifspindelzustellachse, verläuft. Dabei existiert in der ersten Profilierkonfiguration ein Y-Wirkverbindungsbewegungsbereich, innerhalb dessen sich ein auf der Schleifspindel befindliches Schleifwerkzeug in Wirkverbindung mit der ersten Profilierplatte befindet. Insbesondere verläuft die Y-Schleifspindelachse horizontal. Bevorzugterweise kann die Schleifspindel z. B. an einem Shiftschlitten angeordnet sein, der entlang der Y-Schleifspindelachse beweglich gelagert ist. Die Vorteile des Y-Wirkverbindungsbewegungsbereichs wurden bereits weiter oben im Text anhand des entsprechenden Verfahrens diskutiert. Es wird so eine besonders einfache Vorrichtung geschaffen, die gleichzeitig zur Hartfeinbearbeitung von Werkstücken als auch zurVorprofilierung von Schleifschneckenrohlingen geeignet ist. Alternativ dazu kann die Profiliereinrichtung shiftbar, also parallel zur Schleifspindelrotationsachse beweglich ausgeführt sein.

Bevorzugterweise ist die Schleifspindel entlang einer Z-Schleifspindelachse bewegbar, welche Z-Schleifspindelachse parallel zu einer Werkstückrotationsachse der Werkstückspindel, und insbesondere orthogonal zur X-Schleifspindelzustellachse, verläuft, wobei die Schleifspindel entlang der Z-Schleifspindelachse in der Werkstückbearbeitungskonfiguration eine Schleifspindelprofilierhöhe annimmt.

Insbesondere ist dazu ein Shiftschlitten, an dem die Schleifspindel angeordnet ist, entlang der Z-Schleifspindelachse beweglich gelagert. Die Z-Schleifspindelachse verläuft dabei insbesondere vertikal.

Die Beweglichkeit entlang der Z-Schleifspindelachse erlaubt es, die Profiliereinrichtung in einer Höhe anzubringen, die von der Höhe eines auf der Werkstückspindel befindlichen Werkstücks abweicht. Damit kann die Vorrichtung kompakt und flexibel konstruiert werden.

In einer bevorzugten Variante der Erfindung umfasst die Vorrichtung einen, insbesondere drehbar gelagerten, Trägerturm, wobei der Trägerturm insbesondere einen Werkstückträger zum Transport eines Werkstücks zur Werkstückspindel aufweist.

Trägertürme für Verzahnungsschleifmaschinen sind dabei an sich bekannt. Bei einem Trägerturm handelt es sich insbesondere um ein, z. B. im Wesentlichen zylinderförmiges, Bauteil, welches verschiedene funktionelle Elemente einer Verzahnungsschleifmaschine trägt. Dabei befindet sich der Trägerturm insbesondere gegenüber bzw. vor der Schleifspindel. Insbesondere können durch einen drehbaren Trägerturm verschiedene funktionelle Elemente selektiv mit der Schleifspindel in eine Wechselwirkungsstellung gebracht werden, wie z. B. eine Abrichtvorrichtung. Der Trägerturm umfasst insbesondere einen Werkstückträger, der Werkstücke so fixieren kann, dass diese transportierbar sind. Der Werkstückträger kann auch dazu ausgelegt sein, z. B. Schleifwerkzeugrohlinge zur Schleifspindel hin zu transportieren.

Durch das Vorhandensein eines Trägerturms ist die Vorrichtung besonders vielseitig einsetzbar und dabei kompakt. Alternativ kann sie auch ohne Trägerturm ausgeführt sein.

In einer bevorzugten Alternative der obigen Variante der Erfindung ist der Trägerturm in eine Trägerturm-Profilierposition drehbar oder schwenkbar.

Vorteil eines drehbaren oder schwenkbaren Trägerturms ist die Möglichkeit, funktionelle Komponenten am Trägerturm fest anzuordnen. Da die meisten funktionellen Komponenten, wie Abrichtgeräte oder auch die Profiliereinrichtung, in der Regel kleiner sind als der Trägerturm, kann so eine sehr stabile und dennoch flexible Vorrichtung erreicht werden. Alternativ kann der Trägerturm auch drehfest angeordnet sein. In dem Fall können die funktionellen Komponenten z. B. drehbar am Trägerturm angeordnet sein, oder möglicherweise auch die Schleifspindel drehbar um den Trägerturm herum gelagert sein.

Bevorzugterweise ist die Profiliereinrichtung am Trägerturm angeordnet. Die Profiliereinrichtung kann dazu insbesondere an einer der Seitenwände des Trägerturms angeordnet sein.

Dies stellt eine besonders robuste und auch einfache Möglichkeit dar, die erste Profilierplatte in der Vorrichtung zu positionieren. Sie kann dabei insbesondere auf einer der Werkstückspindel abgewandten Seite des Trägerturms angeordnet sein oder z. B. auch auf einer anderen Höhe als ein auf der Werkstückspindel befindliches Werkstück.

In einer bevorzugten Variante der obigen Ausführung sind der Trägerturm und die Werkstückspindel auf einer drehbaren Basis angeordnet, wobei die Profiliereinrichtung, bezogen auf eine Basisdrehachse, in einem Winkelbereich ausserhalb eines Werkstückspindelwinkelbereichs am Trägerturm angeordnet ist.

Die drehbare Basis ist dabei an sich bekannt. Eine solche Basis hat dabei insbesondere eine, auf eine horizontale Ebene bezogene, runde Form. Die Basisdrehachse verläuft z. B. mittig und vertikal durch die Basis. Der Werkstückspindelwinkelbereich ist insbesondere der Winkelbereich den die Werkstückspindel, bezogen auf die Basisdrehachse, einnimmt. Mit anderen Worten ist dies der Bereich, innerhalb dessen von der Basisdrehachse ausgehende und zur Basisdrehachse orthogonal stehende gerade Verbindungslinien zu einem Punkt auf der Werkstückspindel und insbesondere auch zu Punkten auf einem auf der Werkstückspindel angebrachten Werkstück, konstruiert werden können. Mit ausserhalb ist dabei insbesondere gemeint, dass kein Punkt der Profiliereinrichtung sich innerhalb des Winkelbereichs der Werkstückspindel befindet.

Diese Anordnung hat den Vorteil, dass die Vorrichtung auf sehr effiziente und schnelle Weise in die Profilierkonfiguration gebracht werden kann. Es muss hierfür insbesondere nur die Basis so gedreht werden, dass die Profiliereinrichtung zur Schleifspindel weist. Dabei wird gleichzeitig die Werkstückspindel und auch z. B. ein auf ihr befindliches Werkstück, von der Schleifspindel weggedreht. Ebenso ist die Profiliereinrichtung automatisch in einer Warteposition, sobald die die Werkstückspindel der Schleifspindel zugewandt ist.

Alternativ kann die Profiliereinrichtung auch z. B. oberhalb oder unterhalb der Werkstückspindel im selben Winkelbereich angeordnet werden. Die Vorrichtung kann auch ohne drehbare Basis ausgeführt sein.

In einer bevorzugten Alternative zur obigen Ausführung umfasst die Vorrichtung eine am Trägerturm angeordnete Abrichteinrichtung, wobei die Profiliereinrichtung an der Abrichteinrichtung angeordnet ist.

Damit erlaubt die erfinderische Vorrichtung ein zusätzliches Abrichten eines Schleifwerkzeugs, insbesondere nach der Vorprofilierung. Insbesondere ist bei dieser Variante die Profilierkonfiguration mit einer Abrichtkonfiguration der Vorrichtung identisch oder nahezu identisch, womit ein Vorprofilieren mit einem anschliessenden Abrichten besonders schnell und effizient durchführbar ist. Alternativ kann die Profiliereinrichtung auch getrennt von der Abrichteinrichtung angeordnet sein, oder die Vorrichtung ohne Abrichteinrichtung ausgeführt sein.

In einer weiteren Alternative der Erfindung umfasst die Vorrichtung einen am Trägerturm angeordneten Werkstückreitstock mit einer Reitstockbasis, wobei die Profiliereinrichtung an der Reitstockbasis angeordnet ist. Es ist bekannt, zum Halten der Werkstücke an dem Trägerturm einen Reitstock mittels einer Reitstockbasis anzuordnen. Der Reitstock kann dabei insbesondere vertikal entlang des Trägerturms beweglich gelagert sein. Mindestens in der Werkstückbearbeitungskonfiguration der Vorrichtung befindet sich der Reitstock über der Werkstückspindel und weist dieselbe Rotationsachse auf.

Ein Anordnen der Profiliereinrichtung an der Reitstockbasis macht es dabei möglich, auch bei keiner oder nur einer geringen Drehung des Trägerturms in die Profilierkonfiguration zu wechseln, z. B. durch eine Bewegung der Schleifspindel entlang der Z-Schleifspindelachse. Damit wird die Vorrichtung besonders effizient und einfach konstruiert. Die Anordnung blockiert ausserdem keinen unbenutzten Platz am Trägerturm, wodurch z. B. besonders viele weitere funktionelle Komponenten am Trägerturm angeordnet werden können.

In einer bevorzugten Ausführung der Erfindung umfasst die erste Profilierplatte ein Schneidelement mit polykristallinen Diamanten (PKD). Insbesondere besteht die erste Profilierplatte aus polykristallinem Diamanten (PKD), also Diamantpartikeln, die von einer metallischen Matrix umschlossen sind. Alternativ kann auch ein Schneidelement auf einen Grundkörper, z. B. einen Hartmetallgrundkörper, aufgesintert sein.

Versuche haben gezeigt, dass eine erste Profilierplatte mit einem Schneidelement aus polykristallinem Diamanten besonders gut zum Vorprofilieren von Schleifwerkzeugen geeignet ist. Alternativ kann die erste Profilierplatte auch ein Schneidelement aus einem anderen harten Schneidstoff umfassen.

In einer besonders bevorzugten Ausführung aller obigen Varianten der Vorrichtung weist die erste Profilierplatte einen ersten distalen Profilierplattenspitzenwinkel von 1° bis 50°, insbesondere von 5° bis 45°, besonders bevorzugt von 10° bis 30°, auf.

Mit dem Profilierplattenspitzenwinkel ist insbesondere der innere Winkel einer äussersten Spitze der Profilierplatte gemeint. Ein schmaler Winkel sorgt dabei dafür, dass die erste Profilierplatte besonders gut auch zum Erzeugen von schmalen Profilen auf einem Schleifwerkzeugrohling geeignet ist.

In einer bevorzugten Variante der Erfindung weist die Profiliereinrichtung einen ersten Profilierplattenhalter auf, welcher die erste Profilierplatte hält, umfassend
a) einen ersten Klemmfuss, wobei der erste Klemmfuss eine erste Aufnahmefläche aufweist, welche erste Aufnahmefläche in Berührung mit der ersten Profilierplatte steht; und
b) ein erstes Klemmelement, welches die erste Profilierplatte auf die erste Aufnahmefläche drückt.

Der erste Profilierplattenhalter ist insbesondere das Verbindungselement, mit dem die erste Profilierplatte mit dem Rest der Vorrichtung, z. B. einer Trägerturmwand, verbunden ist. Der erste Klemmfuss ist dabei insbesondere die Stütze der ersten Profilierplatte, welche die erste Profilierplatte aufnimmt und gegen Verschiebungen und Brechen stützt.

Das erste Klemmelement befindet sich insbesondere am ersten Klemmfuss. Es ist insbesondere kleiner als der erste Klemmfuss und drückt die erste Profilierplatte lediglich gegen die Aufnahmefläche. Das Klemmelement kann insbesondere mit einer Schraube bzw. einem Bolzen am ersten Klemmfuss befestigt sein. Insbesondere bestehen sowohl Klemmfuss als auch Klemmelement aus Stahl oder Aluminium.

Das erste Klemmelement ist insbesondere drehbar gelagert, so dass es von der Aufnahmefläche, z. B. horizontal, weggedreht werden kann. Alternativ ist es z. B. durch ein Lösen einer Schraubverbindung vom ersten Klemmfuss ganz oder teilweise entfernbar. Dies erlaubt ein einfaches Entfernen und Austauschen der ersten Profilierplatte, falls diese z. B. durch Abnutzung unbenutzbar geworden ist.

In einer bevorzugten Ausführung der Erfindung weist ein erstes Aufnahmeflächenmass der ersten Aufnahmefläche zwischen 50 % und 95% eines ersten Profilierplattenhauptflächenmasses der ersten Profilierplatte auf, insbesondere 80% oder mehr.

Das Aufnahmeflächenmass ist dabei die Fläche der Aufnahmefläche des ersten Klemmfusses, es kann z. B. 200 mm² betragen. Das Profilierplattenhauptflächenmass wiederum ist die Fläche einer Hauptfläche der ersten Profilierplatte, insbesondere die Fläche der Seite der Profilierplatte, die mit der Aufnahmefläche in Berührung steht. Es kann z. B. 250 mm² betragen.

Die erste Profilierplatte ist während eines Profiliervorgangs vergleichsweise starken Kräften ausgesetzt. Damit besteht die Gefahr, dass die erste Profilierplatte z. B. während eines Profiliervorgangs bricht. Das entsprechende Risiko kann mit der grossflächigen Abstützung reduziert werden. Weiter ermöglicht die grossflächige Kontaktierung auch einen verbesserten Wärmetransport von der ersten Profilierplatte, was ebenfalls vorteilhaft ist, da diese sich bei Reibung stark erhitzen kann.

Allerdings ist eine weitere Anforderung an die Profiliereinrichtung, dass insbesondere nur die erste Profilierplatte mit einem Schleifwerkzeugrohling in Berührung und Wirkverbindung gerät. Es ist daher vorteilhaft, die Profilierplatte auf einem Klemmfuss zu lagern, dessen Aufnahmefläche geringer ist, als die Fläche der ersten Profilierplatte, insbesondere in einem distalen Bereich der Profiliereinrichtung. Versuche haben gezeigt, dass bei einem Aufnahmeflächenmass der ersten Aufnahmefläche zwischen 50 % und 95% eines ersten Profilierplattenhauptflächenmasses eine besonders gute Stützung der ersten Profilierplatte erfolgt, ohne dass der erste Klemmfuss einen Profiliervorgang beeinflusst. Insbesondere ist die Aufnahmefläche in einem distalen Bereich des ersten Klemmfusses schmaler als die erste Profilierplatte. Sie ist dabei insbesondere pfeilförmig. Insbesondere ist der erste Klemmfuss hinter bzw. unter der Aufnahmefläche parallel zur Aufnahmefläche gemessen nicht breiter als die Aufnahmefläche. Mit anderen Worten erzeugt eine Projektion des ersten Klemmfusses auf eine Ebene, die parallel zur Aufnahmefläche verläuft in einem distalen Bereich ein Profil, das der Aufnahmefläche entspricht.

Alternativ kann der erste Klemmfuss z.B. eine kleinere Aufnahmefläche aufweisen.

In einer bevorzugten Ausführung der Erfindung weist der erste Klemmfuss eine Dicke senkrecht zur ersten Aufnahmefläche auf, die mindestens 70%, insbesondere mindestens 100%, einer maximalen Länge der Aufnahmefläche entspricht. Um die erste Profilierplatte zu stützen, ist ein ausreichendes Volumen des ersten Klemmfusses notwendig.

Alternativ kann der Klemmfuss auch dünner sein. Dies bedingt allerdings insbesondere eine sorgfältige Materialauswahl.

Die Dicke ist dabei insbesondere die mittlere Dicke des ersten Klemmfusses an allen Orten der ersten Aufnahmefläche.

In einer bevorzugten Ausführung der Erfindung weist der Klemmfuss, angrenzend an die erste Aufnahmefläche, insbesondere senkrecht zur ersten Aufnahmefläche, mindestens eine erste Stabilisierungsfläche auf, die die erste Profilierplatte gegen ein Verrutschen innerhalb des ersten Profilierplattenhalters, insbesondere zumindest in einer Richtung parallel zur Stabilisierungsfläche, abstützt. Die Stabilisierungsfläche hat dabei insbesondere eine Form, die der Form der Seite der ersten Profilierplatte entspricht, die sich mit der Stabilisierungsfläche in Berührung befindet. Die Stabilisierungsfläche ist z.B. orthogonal zur Aufnahmefläche ausgerichtet. Insbesondere kann sie auch zur Aufnahmefläche angewinkelt ausgereichtet sein, wobei ein innerer Winkel weniger als 90° beträgt. Insbesondere ist die erste Profilierplatte dann so ausgeführt, dass sie ebenfalls eine schräge Seite aufweist, die dann von der Stabilisierungsfläche auch gegen Bewegungen von der Aufnahmefläche weg gestützt wird.

Die Stabilisierungsfläche führt auf einer einfachen Weise zu einer sehr stabilen Halterung der ersten Profilierplatte. Damit wird die Vorrichtung besonders zuverlässig und robust.

Bevorzugterweise befindet sich auf der Aufnahmefläche ein, insbesondere zylinderförmiger, Stabilisierungsstift, der in eine Aussparung der ersten Profilierplatte greift. Dieser unterstützt eine korrekte Positionierung der ersten Profilierplatte auf der Aufnahmefläche und nimmt auch Kräfte auf, die parallel zur Aufnahmefläche auf die erste Profilierplatte wirken.

In einer Variante der Erfindung befindet sich der erste Klemmfuss in der ersten Profilierkonfiguration der Vorrichtung über dem ersten Klemmelement. Dies hat den Vorteil, dass bei einem Profiliervorgang ein Schleifwerkzeugrohling so rotiert werden kann, dass seine auf die erste Profilierplatte wirkende Kraft nach oben zeigt. Dies hat zur Folge, dass entstehende Späne frei nach unten fallen können und sich nicht auf der ersten Profilierplatte ansammeln.

Alternativ ist es ohne weiteres möglich, den Klemmfuss unter der ersten Profilierplatte zu positionieren.

In einer bevorzugten Variante aller obigen Ausführungsformen der Erfindung umfasst die Profiliereinrichtung eine zweite Profilierplatte, insbesondere auch eine dritte Profilierplatte, bevorzugt auch eine vierte Profilierplatte.

Insbesondere hat die Vorrichtung entsprechende weitere Profilierkonfigurationen, bei denen die Schleifspindel zur jeweiligen Profilierplatte zugestellt werden kann.

Es können so z. B. verschiedene Profilierplattenformen in derselben Vorrichtung genutzt werden, womit die Vorrichtung noch flexibler wird. Zusätzlich oder alternativ kann so auch eine schnelleinsetzbare Reserve vorhanden sein. Insbesondere kann so auch bei einem Bruch z. B. der ersten Profilierplatte durch einen Wechsel der Profilierkonfiguration und damit der Profilierplatte ein Profiliervorgang fortgesetzt werden bzw. ein weiterer erfolgen. Ausserdem können verschiedene Profilierplatten, z. B. die erste Profilierplatte und die zweite Profilierplatte, als Schrupp- bzw. Schlichtplatte ausgeführt sein. So kann ein Schruppen und ein Schlichten mit verschiedenen designierten Profilierplatten durchgeführt werden. Es kann so auch z. B. eine Profilierplatte, insbesondere die dritte Profilierplatte, als Konturplatte ausgeführt sein, welche für Konturabschnitte vorgesehen ist.

Die Vorrichtung wird somit besonders zuverlässig und flexibel. Alternativ kann die Vorrichtung auch lediglich eine, also die erste, Profilierplatte umfassen.

Bevorzugterweise weisen die Profilierplatten der Profiliereinrichtung einen ersten Profilierplattenspitzenwinkel der ersten Profilierplatte und einen zweiten Profilierplattenspitzenwinkel der zweiten Profilierplatte, insbesondere auch einen dritten Profilierplattenspitzenwinkel der dritten Profilierplatte, besonders bevorzugt auch einen vierten Profilierplattenspitzenwinkel der vierten Profilierplatte, auf, wobei die Profilierplattenspitzenwinkel jeweils zueinander eine Differenz von mindestens 2°, insbesondere mindestens 3°, aufweisen.

Die Abweichungen der Profilierplattenspitzenwinkel der Profilierplatten sorgt dafür, dass je nach gewünschtem Profil eine dazu passende Profilierplatte ausgewählt werden kann. Damit wird die Vorrichtung besonders flexibel und universell einsetzbar. Alternativ können die Profilierplattenspitzenwinkel auch insgesamt oder teilweise gleich sein. Dann können die Profilierplatten einander als Ersatz dienen.

Bevorzugterweise sind eine erste distale Profilierplattenspitze der ersten Profilierplatte und eine zweite distale Profilierplattenspitze der zweiten Profilierplatte, insbesondere auch eine dritte distale Profilierplattenspitze der dritten Profilierplatte, bevorzugt auch eine vierte distale Profilierplattenspitze der vierten Profilierplatte, bezogen auf eine Anordnungsebene auf einem Kreisumfang angeordnet. Dabei ist die Profiliereinrichtung um eine, zur Anordnungsebene orthogonal und mittig durch den Kreisumfang verlaufende, Umsetzachse schwenkbar oder drehbar gelagert, so dass jede Profilierplattenspitze zur Schleifspindel ausrichtbar ist, wobei die Anordnungsebene entweder parallel, insbesondere als Rundtischanordnung, oder angewinkelt, insbesondere als Revolveranordnung, zu einer Hauptfläche der ersten Profilierplatte verläuft.

Die Anordnung bezogen auf die Anordnungsebene ist dabei insbesondere so zu verstehen, dass die Positionen der Profilierplattenspitzen orthogonal zur Anordnungsebene auf die Anordnungsebene projiziert werden. So kann bei einer Anordnungsebene, die parallel zur ersten Aufnahmefläche verläuft, nach wie vor ein Höhenunterschied der Profilierplatten vertikal zur Anordnungsebene mitgemeint sein. Eine Rundtischanordnung meint, dass die Profilierplattenspitzen entlang des Kreisumfangs gleichmässig verteilt sind.

Eine Revolveranordnung meint, dass die Anordnungsebene so verläuft, dass die Umsetzachse, projiziert auf eine horizontale Ebene, orthogonal zur Schleifspindelrotationsachse verläuft. Ein Wechsel der Profilierplatte erfolgt also durch ein revolverartiges Umsetzen bzw. Drehen.

Diese Anordnungen haben den Vorteil, dass die Profiliereinrichtung mit mehr als einer Profilierplatte besonders kompakt ausgeführt werden kann und die Vorrichtung besonders schnell und effizient in eine andere Profilierkonfiguration wechseln kann.

In einer Alternative zur obigen Ausführung der Erfindung ist die Profiliereinrichtung eine Stapelprofiliereinrichtung, wobei eine erste distale Profilierplattenspitze der ersten Profilierplatte und eine zweite distale Profilierplattenspitze der zweiten Profilierplatte, insbesondere auch eine dritte distale Profilierplattenspitze der dritten Profilierplatte, bevorzugt auch eine vierte distale Profilierplattenspitze der vierten Profilierplatte, entlang einer Stapelachse, die orthogonal zu einer Hauptfläche der ersten Profilierplatte verläuft, voneinander beabstandet sind und bezogen auf eine Ebene, die parallel zur Hauptfläche der ersten Profilierplatte verläuft, gleich ausgerichtet sind.

Dies hat den Vorteil, dass die Profiliereinrichtung insbesondere ohne bewegliche Teile ausgeführt werden kann. Damit wird sie besonders robust. Die Stapelprofiliereinrichtung kann auch um die Stapelachse bewegbar gelagert sein, so dass jede Profilierplattenspitze auf eine Schleifwerkzeugbearbeitungshöhe bringbar ist. Dies wiederum erzeugt eine Profiliereinrichtung die einen besonders kleinen Winkelbereich z. B. am Trägerturm einnimmt und gleichzeitig insbesondere ohne Bewegungen der Schleifspindel entlang der Z-Schleifspindelachse auskommt.

Bevorzugterweise umfasst die Vorrichtung einen Taster, wobei die Vorrichtung eine erste Profilierplattenvermesskonfiguration hat, bei der der Taster zur Profiliereinrichtung zustellbar ist, bis der Taster sich mit der ersten Profilierplatte in Berührung befindet.

Eine Erläuterung des Tasters und seiner Funktion befindet sich weiter oben im Text. Der Taster kann z. B. einen quadratischen bzw. würfelförmigen Messkopf aufweisen. Dieser ist selber in seiner Geometrie besonders einfach erfassbar und auch in bildgebenden Verfahren einfach vermessbar.

Insbesondere umfasst die Vorrichtung einen Schleifschlitten zum Zustellen der Schleifspindel. Dabei kann sie weiter auch einen am Schleifschlitten angeordneten Shiftschlitten umfassen, der entlang der Y-Schleifspindelachse beweglich gelagert ist. Der Taster ist in dieser Variante bevorzugt am Shiftschlitten, z. B. neben der Schleifspindel, angeordnet. Insbesondere kann der Taster vor die Schleifspindel klappbar ausgeführt sein, z. B. um eine vertikale oder eine horizontale, insbesondere zur Schleifspindelrotationsachse parallele, Achse. Dazu kann der Taster einen Schwenkarm umfassen.

Bevorzugter Weise umfasst die Vorrichtung eine Steuereinheit, die dazu ausgelegt ist, die Vorrichtung dazu zu veranlassen, ein erfindungsgemässes Verfahren durchzuführen. Die Steuereinheit kann ein PC oder ein PLC sein, auf dessen Speichereinheit Befehle gespeichert und abrufbar sind, die das Verfahren ausführen. Die Steuereinheit kann insbesondere an der Vorrichtung selber angeordnet und z. B. mittels eines Touchscreens bedienbar sein. Sie kann allerdings auch lediglich mit dem Rest der Vorrichtung mit einer Datenübertragungsverbindung verbunden sein. In dieser Variante umfasst die Vorrichtung insbesondere eine Befehlseinheit, die geeignet ist, die Befehle der Steuereinheit zu empfangen und in tatsächliche Aktionen umzusetzen.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1A-C: eine Ausführungsform einer erfindungsgemässen Wälzschleifmaschine;
- Fig. 2: ein Flussdiagramm einer Ausführungsform eines erfindungsgemässen Verfahrens;
- Fig. 3A-C: eine weitere Ausführungsform einer erfindungsgemässen Wälzschleifmaschine;
- Fig. 4: ein Flussdiagramm einer weiteren Ausführungsform eines erfindungsgemässen Verfahrens;
- Fig. 5A, B: eine weitere Ausführungsform einer erfindungsgemässen Wälzschleifmaschine;
- Fig. 6: eine Profiliereinrichtung als Stapelanordnung;
- Fig. 7: eine weitere Profiliereinrichtung als Revolveranordnung; und
- Fig. 8: eine weitere Profiliereinrichtung als Rundtischanordnung.

Grundsätzlich sind in den Figuren gleiche Teile mit gleichen Bezugszeichen versehen.

### Wege zur Ausführung der Erfindung

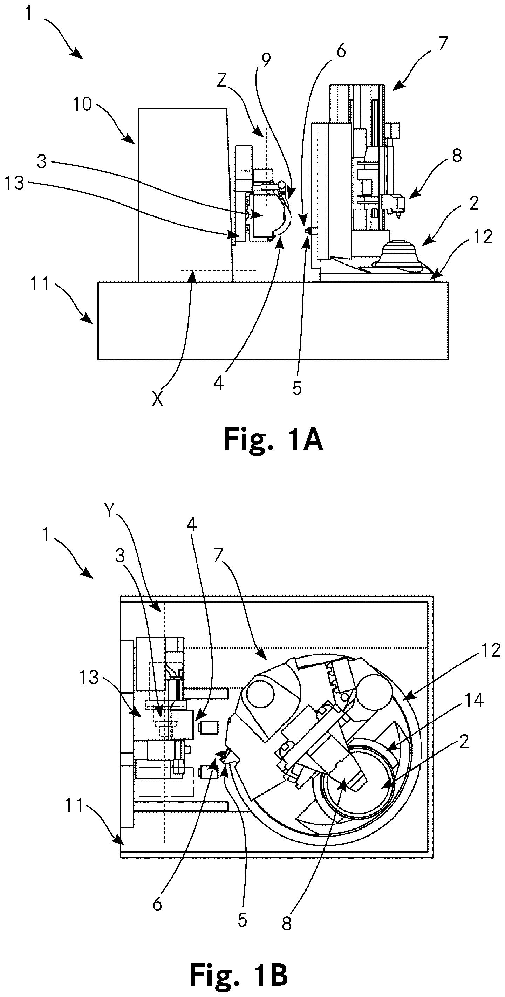

Fig. 1A und Fig. 1B zeigen eine erste erfinderische Wälzschleifmaschine 1. Dabei zeigt Fig. 1A die Wälzschleifmaschine 1 als Seitenansicht und Fig. 1B einen Teil der Wälzschleifmaschine 1 in einem horizontalen Schnitt. Die Wälzschleifmaschine 1 umfasst ein Maschinenbett 11 auf dessen oberer Seite ein schematisch dargestellter Schleifschlitten 10 und ein vertikal (vertikal in der Bildebene von Fig. 1A und orthogonal zur Bildebene von Fig. 1B) ausgerichteter Trägerturm 7 nebeneinander angeordnet sind. Der beweglich zum Maschinenbett 11 gelagerte Schleifschlitten 10 umfasst einen zum Trägerturm 7 weisenden Shiftschlitten 13, mit einer Schleifspindel 3 zur Rotation einer Schleifschnecke 4 um eine im Wesentlichen horizontal (orthogonal zur Bildebene von Fig. 1A und vertikal in der Bildebene von Fig. 1B) verlaufende Rotationsachse. Die Schleifspindel 3 befindet sich in der dargestellten Stellung des Shiftschlittens 13 in etwa auf einem Drittel der Maximalhöhe des Trägerturms 7. Der Schleifschlitten 10 ist entlang einer horizontalen Achse X zum Trägerturm 7 zustellbar. Ausserdem ist der Shiftschlitten 13 relativ zum Schleifschlitten 10 in einer vertikalen Achse Z parallel zu einer Rotationsachse einer Werkstückspindel 2 sowie entlang einer Achse Y (siehe Fig. 1B) parallel zu einer Rotationsachse der Schleifspindel 3 verfahrbar. Zusätzlich ist durch den Shiftschlitten 13 die Rotationsachse der Schleifspindel 3 um einen Winkel von etwa 40° in beide Richtungen zur horizontalen Ebene verkippbar (wodurch sich auch die Achse Y verkippt). Ebenfalls am Shiftschlitten 13 und über der Schleifspindel 3 angeordnet ist eine Kühlöldüse 9, welche einen Wirkungsbereich um die Schleifschnecke 4 herum mit Kühlöl versorgen kann.

Der Trägerturm 7 und eine neben dem Trägerturm befindliche Werkstückspindel 2 zur Rotation eines darauf befindlichen Werkstücks (nicht gezeigt) um eine vertikal liegenden Rotationsachse sind dabei auf einer relativ zum Maschinenbett 11 drehbar gelagerten Basis 12 angeordnet. Die Basis 12 ist dabei um eine vertikale und mittig durch die Basis 12 verlaufende Basisdrehachse drehbar gelagert. Drehungen der Basis 12 können so die Werkstückspindel 2 zum Schleifschlitten 10 ausrichten. Am Trägerturm angeordnet befindet sich ausserdem über der Werkstückspindel 2 ein vertikal verfahrbarer Reitstock 8 mit einer Reitstockbasis, der ein auf der Werkstückspindel 2 befindliches Werkstück von oben kommend einspannen kann.

Zusätzlich weist die Wälzschleifmaschine 1 einen am Trägerturm 7 angeordneten Greifer 14 auf, der in der Lage ist, Werkstücke zu greifen und zu transportieren. Der Greifer 14 befindet sich an einem Schwenkarm, mit der er um eine vertikale, seitlich am Trägerturm 7 verlaufende Schwenkachse ausgeschwenkt werden kann. Ergreift der Greifer 14 ein Werkstück und schwenkt ein, wird das Werkstück so positioniert, dass seine Werkstückachse mit der Rotationsachse der Werkstückspindel 2 zusammenfällt. Durch ein Verfahren des Reitstocks 8 kann es dann auf der Werkstückspindel 2 fixiert werden. Anschliessend kann der Greifer 14 geöffnet und vom Werkstück weg bewegt werden.

In einer Werkstückbearbeitungskonfiguration ist die Basis 2 so gedreht, dass die Werkstückspindel 2 zur Schleifspindel 3 und damit zur Schleifschnecke 4 weist (nicht gezeigt). Der Shiftschlitten 13 ist entlang der Achse Z auf eine Höhe gefahren, bei der die Schleifschnecke 4 im Wesentlichen dieselbe Höhe hat, wie ein Werkstück auf der Schleifspindel 2. Damit ist die Schleifspindel 2 durch den Schleifschlitten 10 entlang der Achse X zur Werkstückspindel zustellbar, bis die Schleifschnecke 4 und ein auf der Werkstückspindel 2 befindliches Werkstück in Wirkverbindung stehen.

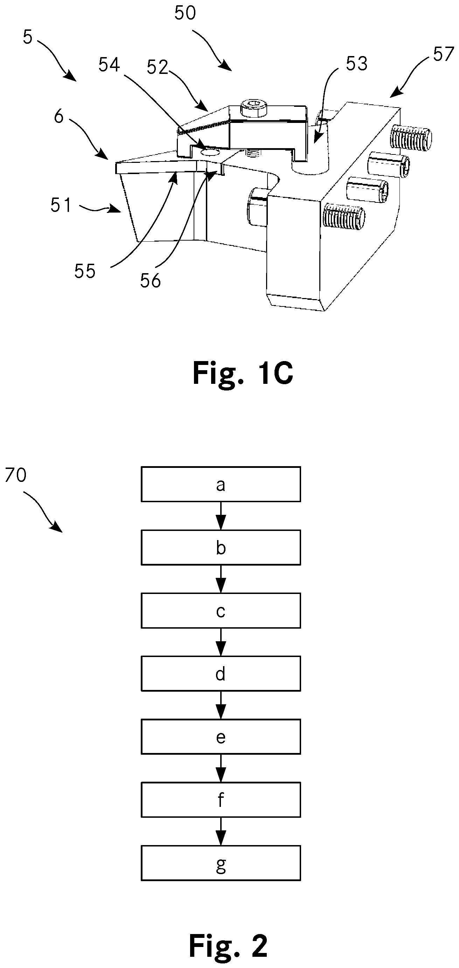

Ausserdem ist am Trägerturm 7, auf einer der Werkstückspindel abgewandten Seite des Trägerturms 7, und damit bezogen auf die Basisdrehachse in einem Winkelbereich, der ausserhalb des Winkelbereichs der Werkstückspindel 2 liegt, eine Profiliereinrichtung 5 angeordnet, die eine Profilierplatte 6 umfasst. Weitere Details zur Profiliereinrichtung 5 werden anhand der Fig. 1C weiter unten erläutert. Die Profiliereinrichtung 5 ist dabei auf einer vertikalen Höhe, die ungefähr mittig zwischen dem Reitstock 8 und der Werkstückspindel 2 liegt, und ausserhalb der Basisdrehachse am Trägerturm 7 fixiert. Durch eine Drehung der Basis 12 ist die Profilierplatte 6 in eine Schleifwerkzeugbearbeitungsposition schwenkbar. Durch eine zusätzliche entsprechende Positionierung der Schleifspindel 4, bei der sich die Rotationsachse der Schleifspindel 4 in etwa auf der Höhe der Profilierplatte 6 befindet, ist die Wälzschleifmaschine 1 in eine Profilierkonfiguration bringbar. In der Profilierkonfiguration ist die Schleifspindel 3 entlang der Achse X zur Profiliereinrichtung 5 zustellbar, bis die Schleifschnecke 4 sich mit der Profilierplatte 6 in Wirkverbindung befindet. Damit kann die Schleifschnecke 4 durch die Profilierplatte 6 vorprofiliert oder vollständig profiliert werden.

Fig. 1C zeigt die Profiliereinrichtung 5 zusammen mit der Profilierplatte 6 als isometrische Draufsicht. Die Profilierplatte 6 besteht aus einem polykristallinen Diamanten. An ihrem distalen Ende läuft sie spitz zusammen, wobei sie einen inneren Profilierplattenspitzenwinkel von 15° aufweist. Der Profilierplattenspitzenwinkel könnte auch einen abweichenden Wert, z. B. einen Winkel zwischen 10° und 30° aufweisen. Das äussere Profil ihrer Hauptflächen besteht aus zwei Teilen: Ein längerer distaler Teil ist dreieckig, bzw. pfeilförmig (mit dem oben genannten Profilierplattenspitzenwinkel) und ein kürzerer proximaler Teil rechteckig, wobei dessen längste Kante das proximale Ende der Profilierplatte 6 darstellt. Dabei verlaufen die Aussenkanten des proximalen Teils zur Symmetrieachse des Dreiecks angewinkelt, mit einem Winkel von etwa 40°. In einem proximalen Bereich ist die Profilierplatte 6 kreisförmig durchstossen.

Die Profilierplatte 6 befindet sich innerhalb eines Profilierplattenhalters 50. Der Profilierplattenhalter 50 besteht dabei im Wesentlichen aus zwei Teilen, einem Klemmfuss 51 und einem Klemmelement 52. Der Klemmfuss 51 dient der Profilierplatte 6 als Auflage und Stütze, während das Klemmelement 52 die Profilierplatte 6 auf den Klemmfuss 51 drückt und diese so fixiert. Der Klemmfuss 51 umfasst eine horizontale Aufnahmefläche 55 zur Aufnahme der Profilierplatte 6, wobei die Form der horizontalen Aufnahmefläche 55 der Form der Profilierplatte 6 ähnelt. Ein distaler Bereich der Aufnahmefläche, welcher mit dem distalen Teil der Profilierplatte 6 in Kontakt steht, läuft ebenfalls in einer Pfeilform spitz zusammen. Dabei liegt die distale Spitze der Profilierplatte 6 allerdings ausserhalb der distalen Spitze der Aufnahmefläche 55. Die Profilierplatte 6 ragt so in einem distalen Bereich allseitig über den Klemmfuss 51 hinaus, wodurch bei einem Profiliervorgang die Schleifschnecke 4 nur mit der Profilierplatte 6 und nicht direkt mit dem Klemmfuss 51 in Wirkverbindung gerät. Im proximalen Bereich schliessen die äusseren Kanten der Aufnahmefläche 55 und die äusseren Kanten der Profilierplatte 6 miteinander bündig ab. Insgesamt hat die Aufnahmefläche 55 so ein Flächenmass, das in etwa 90% des Flächenmasses der Hauptfläche der Profilierplatte 6, die mit der Aufnahmefläche 55 in Berührung steht, ausmacht.

Auf der Aufnahmefläche 55 befindet sich ausserdem ein zylinderförmiger Fixierstift 54, welcher durch den Durchstoss der Profilierplatte 6 tritt, und an dessen Oberfläche bündig mit der Profilierplatte 6 abschliesst. Durch den Fixierstift 54 wird die Profilierplatte 6 in ihrer Position fixiert und gegen Verschiebungen gesichert. Proximal angrenzend an die Aufnahmefläche 55 befindet sich am Klemmfuss 51 eine vertikale Stabilisierungsfläche 56, deren rechteckige Form der proximalen Seitenfläche der Profilierplatte 6 entspricht, wobei sich die Stabilisierungsfläche 56 ebenfalls mit der Profilierplatte 6 in Berührung befindet. Durch die Stabilisierungsfläche 56 werden insbesondere Verdrehungen der Profilierplatte 6 verhindert.

Unter der Aufnahmefläche 55 ist der Klemmfuss 55 keilartig ausgeformt. Die distale Keilkante verläuft dabei zu einer vertikalen Geraden mit einem inneren Winkel von in etwa 20°, so dass der Klemmfuss sich unter der Aufnahmefläche zurückzieht. So wird bei ausreichender Stützung der Profilierplatte 6 gewährleistet, dass es zu keinen Berührungen des Klemmfusses mit der Schleifschnecke 4 kommt. Die Dicke des Klemmfusses 51 unter der Aufnahmefläche, also die vertikale Ausdehnung zwischen Aufnahmefläche 55 und Unterseite, entspricht in etwa der maximalen horizontalen Länge der Aufnahmefläche. Der Klemmfuss weist ausserhalb der Aufnahmefläche 55 im Wesentlichen eine Dicke auf, die der Dicke unter der Aufnahmefläche 55 mit der zusätzlichen Höhe der Stabilisierungsfläche 56 entspricht. Hinter der Stabilisierungsfläche 56 bleibt die Oberseite des Klemmfusses so im Wesentlichen bündig mit der Oberseite der Profilierplatte 6.

An seinem von der Profilierplatte 6 wegweisenden Ende weist der der Klemmfuss 51 einen Verbindungsbereich 57 auf, welcher in der horizontalen Ebene die Form eines T-Stücks aufweist, wobei der Aufnahmebereich der Profilierplatte 6 mittig vom Verbindungsbereich 57 weg verläuft. Auf beiden Seiten des Verbindungsbereichs 57 befinden sich in horizontale Durchstösse eingebrachte Befestigungsbolzen mit Aussengewinden. Mit den Befestigungsbolzen ist der Klemmfuss 51 am Trägerturm 7 so festgeschraubt, dass die Profilierplatte 6 horizontal liegt und vom Trägerturm 7 absteht. Zwischen den Befestigungsbolzen befinden sich am Klemmfuss 51 zusätzliche Stabilisierungsstifte, die in eine Aussparung am Trägerturm 7 greifen.

Auf der Oberseite des Klemmfusses 51, hinter der Aufnahmefläche 55 und der Stabilisierungsfläche 56, ist über einen Befestigungsbolzen, der mit seinem Aussengewinde in eine Bohrung mit Innengewinde greift, das Klemmelement 52 befestigt. Das insgesamt in der vertikalen Ebene C-förmige Klemmelement 52 hat dabei einen der Profilierplatte 6 zugewandten Vorderteil, der sich von dem Befestigungsbolzen aus in Richtung der Profilierplatte verjüngt und mit einem, nach unten zur Profilierplatte 6 weisenden, Aufpressbereich endet. Der Aufpressbereich ist der Teil des Klemmelements 52, der die Oberseite der Profilierplatte 6 berührt und die Profilierplatte 6 von oben kommend auf die Aufnahmefläche 55 klemmt. Der der Profilierplatte 6 abgewandte Hinterteil des Klemmelements 52 hat einen, ebenfalls nach unten weisenden, Stabilisierungsbereich, welcher in eine Aussparung 53 auf der Oberseite des Klemmfusses 51 greift. Durch das Zusammenwirken von Stabilisierungsbereich und Klemmfuss 51 wird das Klemmelement 52 gegen Drehungen um den Befestigungsbolzen gesichert. Mit dem Profilierplattenhalter 50 ist die Profilierplatte 6 ausreichend stark gestützt, um sich während eines Profiliervorgangs nicht zu verschieben oder zu brechen. Gleichzeitig ist die Profilierplatte 6 durch ein einfaches Lösen des Klemmelements 52 einfach auswechselbar.

Fig. 2 zeigt ein Flussdiagramm eines erfindungsgemässen Verfahrens 70. In einem ersten Schritt a wird die Wälzschleifmaschine 1 aus Fig. 1A- Fig. 1C mit der Werkstückspindel 2, der entlang der Achse X zustellbaren Schleifspindel 3 zum Rotieren eines Schleifwerkzeugs (z.B. der Schleifschnecke 4), sowie der Profiliereinrichtung 5 mit der Profilierplatte 6 bereitgestellt. Im folgenden Schritt b wird auf der Schleifspindel 3 ein Schleifschneckenrohling (z. B. Schleifschnecke 4, noch ohne Schleifprofil) bereitgestellt und an der Schleifspindel 3 montiert.

In einem Schritt c wird dann von einer Steuereinheit die Profilierung vorberechnet: Es werden alle für die Vorprofilierung nötigen Eingaben, wie Bewegungsprofile des Schleifschlittens 10 und des Shiftschlittens 13 sowie die Rotationsgeschwindigkeit der Schleifspindel 3 vorbestimmt, die für das vollständige Vorprofilieren notwendig sind. Hierzu wiederum besteht die Notwendigkeit, die Geometrie der Profilierplatte 6 genau zu kennen. Es wird ein digitaler Zwilling der Profilierplatte 6 abgerufen, der durch Simulationen aller mit der Profilierplatte 6 erfolgter Profiliervorgänge den Abnutzungszustand der Profilierplatte 6 repräsentiert. Mittels der Informationen aus diesem digitalen Zwilling wird die Profilierung vorberechnet. Die Vorberechnung kann auch schon bereits vor der Montage des Schleifschneckenrohlings erfolgen.

Die Wälzschleifmaschine 1 wird dann in einem Schritt d in die Profilierkonfiguration gebracht: Hierzu wird die Basis 12 so rotiert, dass die Profiliereinrichtung 5 mit der Profilierplatte 6 die der Schleifspindel 3 nächstmögliche Position einnimmt und eine radiale Verbindungslinie vom Zentrum des Trägerturms 7 über die Profilierplatte 6 orthogonal zur Rotationsachse der Schleifspindel 3 und damit zur Achse Y steht (siehe Fig. 1B). Dies ist die Schleifwerkzeugbearbeitungsposition der Profilierplatte 6. Zusätzlich wird der Shiftschlitten 13 entlang der Achse Z so verfahren, dass die Rotationsachse der Schleifspindel 3 sich auf derselben Höhe (entlang der Achse Z) befindet, wie die Profilierplatte 6. Der Shiftschlitten 13 wird ausserdem entlang der Achse Y so gefahren, dass ein erster äusserer Bereich des geplanten Profils der Profilierplatte gegenüberliegt.

Im folgenden Schritt e wird die Schleifspindel 3 über die Achse X zur Profiliereinrichtung 5 zugestellt, bis der Schleifschneckenrohling und die Profilierplatte 6 in Wirkverbindung stehen.

Im Schritt f erfolgt dann das Vorprofilieren des Schleifschneckenrohlings: Die Schleifspindel 3 rotiert den Schleifschneckenrohling aus der Perspektive von Fig. 1A im Uhrzeigersinn, so dass die jeweils der Profilierplatte 6 zugewandte Seite des Schleifschneckenrohlings sich von oben nach unten bewegt. Gleichzeitig fährt der Shiftschlitten 13 entlang der Achse Y in einer im Schritt c vorausberechneten Geschwindigkeit von dem ersten äusseren Bereich des geplanten Profils die Länge des geplanten Profils auf der Schleifschnecke ab bis zu einem zweiten äusseren Bereich. Hierdurch wird von der Profilierplatte 6 in den Schleifschneckenrohling ein Schleifschneckenprofil eingetragen.

Nachdem die Profilierplatte das geplante Schleifschneckenprofil durch die Bewegung entlang der Achse Y einmal vollständig durchlaufen hat, folgt eine Zurückstellung des Schleifschlittens 10 entlang der Achse X, so dass sich die Profilierplatte 6 und der Schleifschneckenrohling nicht mehr berühren. Dann wird der Shiftschlitten 13 wieder in die Ausgangsposition der Profilierkonfiguration gebracht, also entsprechend entlang der Achse Y neu positioniert.

In einem weiteren Durchlauf wird die Schleifspindel 3 erneut durch den Schleifschlitten 10 zur Profilierplatte 6 zugestellt und es erfolgt wieder eine Rotation der Schleifspindel 3 sowie eine Bewegung des Shiftschlittens 13 entlang der Achse Y.

Dieser Vorgang kann noch weitere Male gemäss der Vorberechnung in Schritt c wiederholt werden. Nach Abschluss der Vorprofilierung erfolgt ein letztmaliges Zurückstellen des Schleifschlittens 10.

Es wird nun im Schritt g durch eine Simulation des erfolgten Schleifvorgangs der digitale Zwilling unter Berücksichtigung der gesammelten Bewegungsdaten des Schritts f (dem Vorprofilieren) aktualisiert. Damit repräsentiert der digitale Zwilling den neuen Abnutzungszustand der Profilierplatte 6 und kann zur Vorberechnung von weiteren Vorprofilierungen dienen.

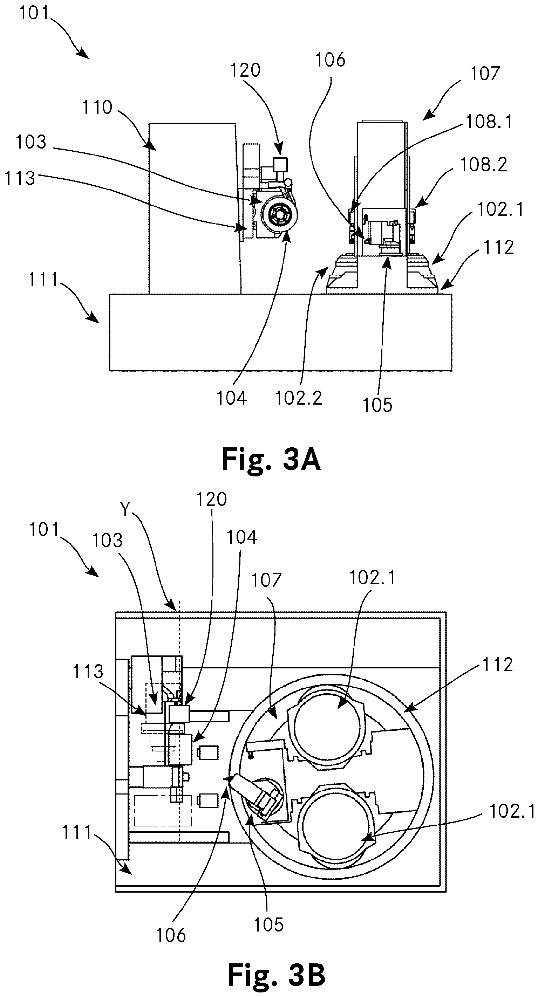

Fig. 3A bis Fig. 3C zeigen eine weitere erfindungsgemässe Wälzschleifmaschine 101 bzw. Teile von dieser. Dabei zeigt Fig. 3A die Wälzschleifmaschine 101 als direkte Seitenansicht, während Fig. 3B die Wälzschleifmaschine 101 in einem horizontalen Schnitt auf Höhe der Profilierplatte 106 zeigt. Das Maschinenbett 111, der Schleifschlitten 110 sowie der Shiftschlitten 113, die Schleifspindel 103, und die drehbare Basis 112 der Wälzschleifmaschine 101 entsprechen im Wesentlichen denen der Wälzschleifmaschine 1 aus Fig. 1A und Fig. 1B.

Auf der Basis 112 ist ein Trägerturm 107 angeordnet. Die Wälzschleifmaschine 101 ist als Multispindelmodul mit einer ersten Werkstückspindel 102.1 und einer zweiten Werkstückspindel 102.2 ausgebildet, welche auf zwei gegenüberliegenden Seiten des Trägerturms 107 angeordnet sind. Am Trägerturm 107, jeweils über den Werkstückspindeln 102.1, 102.2 befindet sich ein erster Reitstock 108.1 bzw. ein zweiter Reitstock 108.2.

Die Wälzschleifmaschine 101 hat so zwei Werkstückbearbeitungskonfigurationen, bei denen die Basis 112 jeweils so gedreht ist, dass eine der beiden Werkstückspindeln 102.1, 102.2 der Schleifspindel 103 zugewandt ist.

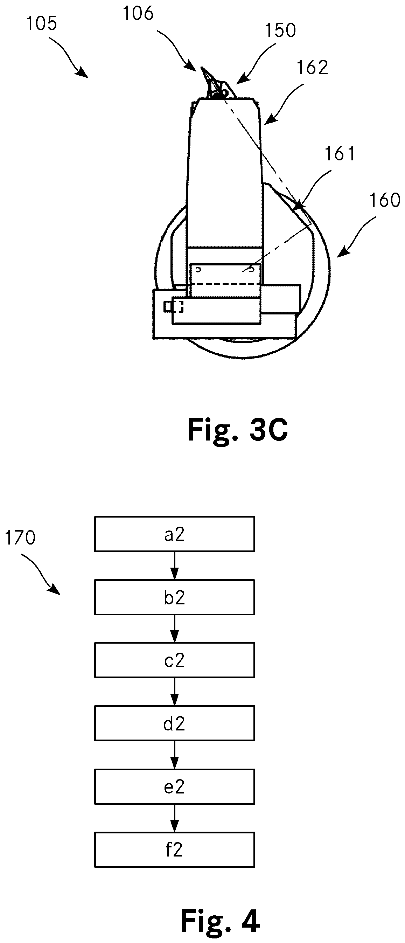

Weiter ist an einer Seite des Trägerturms 107, die von beiden Werkstückspindeln 102.1, 102.2 jeweils radial in einem 90° Winkel weg weist, eine Profiliereinrichtung 105 mit einer Profilierplatte 106 angeordnet. Diese wird anhand von Fig. 3C weiter unten im Detail beschrieben.

Die Wälzschleifmaschine 101 umfasst ausserdem einen würfelförmigen Taster 120, der über einen Schwenkarm am Shiftschlitten 113 angeordnet ist. In einer Profilierplattenvermesskonfiguration der Wälzschleifmaschine 101 befindet sich der ansonsten vertikal nach oben gerichtete Schwenkarm des Tasters 120 in einer horizontalen Ausrichtung. Damit befindet sich der Taster 120 vor der Schleifspindel 103 und der Schleifschnecke 104. Der Shiftschlitten 113 ist ausserdem entlang der Achse Y so fahrbar, dass der Taster 120 sich mittig vor dem Trägerturm 107 befindet. Der Taster 120 umfasst einen Berührungssensor. Weiter umfasst die Wälzschleifmaschine 101 eine Steuereinheit, die dazu ausgelegt ist, Bewegungen des Schleifschlittens 110, des Shiftschlittens 113 und Signale des Berührungssensors des Tasters 120 zu korrelieren. Somit kann mittels des Tasters 120 die Abnutzung der Profilierplatte 106 vermessen werden (Details zum Verfahren werden anhand von Fig. 4 weiter unten erläutert).

Fig. 3C zeigt die Profiliereinrichtung 105 der Wälzschleifmaschine 101 (Fig. 3A, Fig. 3B) als direkte Draufsicht. Die Profilierplatte 106 und die Profilierplattenhalterung 150 entsprechen der Profilierplatte 6 und der Profilierplattenhalterung 50 der ersten Ausführungsform (Fig. 2C). Zusätzlich umfasst die Profiliereinrichtung 105 eine runde Schwenkbasis 160, auf der über einen Halter 161 ein Schwenkarm 162 angeordnet ist. Der Schwenkarm 162 hat dabei im Wesentlichen die Form eines Quaders, dessen horizontale Breite in etwa 40% seiner horizontalen Länge ausmacht. Die vertikale Dicke des Schwenkarms 162 (siehe Fig. 2A) entspricht in etwa seiner horizontalen Länge. Die Profilierplattenhalterung 150 ist dabei an dem distalen Ende des Schwenkarms 162 so angebracht, dass die Unterseite der Profilierplattenhalterung 150 und die Unterseite des Schwenkarms 162 in etwa auf gleicher Höhe liegen (siehe Fig. 3A). Die pfeilartige Spitze der Profilierplatte 106 hat einen inneren Winkel von in etwa 40° zu den Längskanten des Schwenkarms 162.

In der Profilierkonfiguration der Wälzschleifmaschine 101 ist der Schwenkarm 162 der Profiliereinrichtung 105 so vom Trägerturm 107 abgeschwenkt, dass die Profilierplatte 106 radial vom Trägerturm weg weist (siehe Fig. 3B).

Fig. 4 zeigt schematisch ein weiteres erfindungsgemässes Verfahren 170. Im Schritt a2 wird die Wälzschleifmaschine 101 bereitgestellt. Im Schritt b2 wird dann ein Schleifschneckenrohling in der Grösse der Schleifschnecke 104 bereitgestellt.

Anders als bei dem Verfahren 70 in Fig. 2, wird bei dem Verfahren 170 aus Fig. 4 die Profilierplatte im Schritt c2 zunächst vermessen. Dazu wird die Wälzschleifmaschine 101 in eine Profilierplattenvermesskonfiguration gebracht. Dies beinhaltet ein Drehen der Basis des Trägerturms 107, so dass die Seite des Trägerturms 107, an der sich die Profiliereinrichtung 105 befindet, direkt zur Schleifspindel 103 weist. Ausserdem wird der Schwenkarm 162 der Profiliereinrichtung so geschwenkt, dass die Profilierplatte 106 direkt auf die Schleifspindel 103 weist. Zusätzlich wird der Schwenkarm des Tasters 120 in eine horizontale Ausrichtung geschwenkt und der Shiftschlitten 113 entlang der Achse Y so gefahren, dass der Taster 120 sich mittig vor dem Trägerturm 107 befindet.

Dann wird durch den Schleifschlitten 110 der Taster 120 zur Profilierplatte 106 entlang der Achse X zugestellt, bis der Taster 120 eine Berührung registriert. Anschliessend wird der Taster 120 zurückgestellt und mittels des Shiftschlittens 113 entlang der Achse Y um einen Wert verfahren, der in etwa der Hälfte der maximalen Breite der Profilierplatte 106 entspricht. Anschliessend wird der Taster 120 erneut zur Profilierplatte 106 zugestellt, bis der Taster 120 eine weitere Berührung registriert. Dieses Vorgehen wird auch für die andere Richtung entlang der Achse Y wiederholt. Anhand der registrierten Berührungen und der mit einer Berührung korrespondierenden Positionen entlang der Achsen X und Y (sowie der bekannten Geometrie des Tasters 120) wird dann die Geometrie der Profilierplatte 106 bestimmt, insbesondere deren Abnutzung durch vorherige Profiliervorgänge. Es folgt ausserdem eine Vorberechnung der Vorprofilierung auf Basis der durch die Vermessung bestimmten Geometrie der Profilierplatte 106 durch die Steuereinheit der Wälzschleifmaschine 101.

Im nächsten Schritt d2 wird die Wälzschleifmaschine 101 in die Profilierkonfiguration gebracht. Der Trägerturm 107 und die Profiliereinrichtung 105 behalten dieselben Positionen wie in der Profilierplattenvermesskonfiguration bei, allerdings wird der Taster 120 in eine vertikale Ausrichtung geschwenkt. Dadurch kann der Schleifschneckenrohling im Schritt e2 zur Profiliereinrichtung 105 zugestellt werden, bis der Schleifschneckenrohling und die Profilierplatte 106 in Wirkverbindung stehen.

Das Vorprofilieren im Schritt f2 entspricht im Wesentlichen dem Schritt f aus dem Verfahren 70 in Fig. 2, wobei allerdings die Messwerte aus Schritt c2 als Basis für die Bewegungen des Schleifschlittens 110 und des Shiftschlittens 113 dienen.

Im Gegensatz zum Verfahren 70 aus Fig. 2 benötigt das Verfahren 170 keine Simulation des Profiliervorgangs in einem weiteren Schritt.

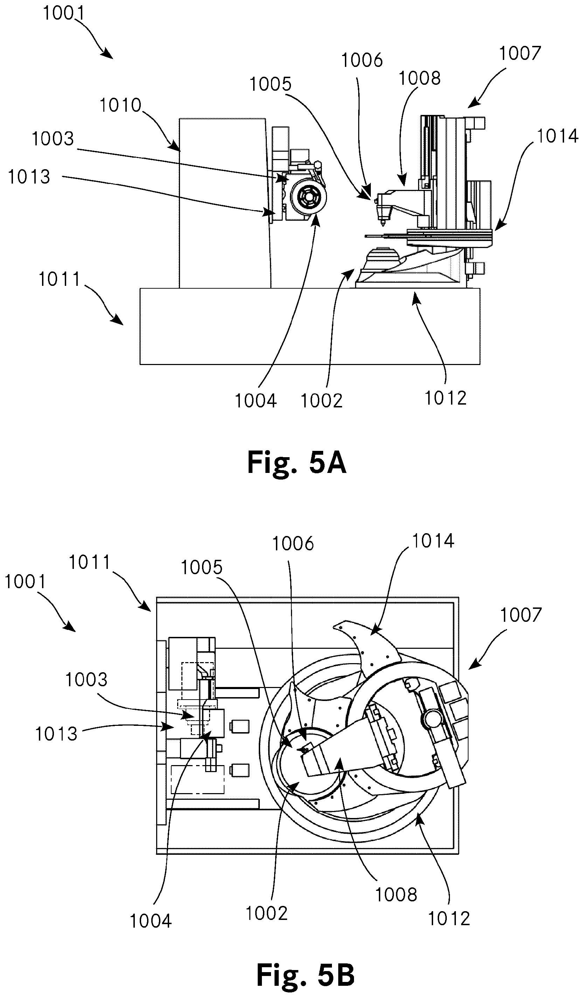

Fig. 5A und Fig. 5B zeigen eine weitere erfindungsgemässe Wälzschleifmaschine 1001, wobei Fig. 5A die Wälzschleifmaschine 1001 als direkte Seitenansicht und Fig. 5B die Wälzschleifmaschine 1001 in einem horizontalen Querschnitt auf Höhe der Profilierplatte 1006 zeigt.

Das Maschinenbett 1011, der Schleifschlitten 1010, der Shiftschlitten 1013, die Schleifspindel 1003 sowie die Schleifschnecke 1004 sind derselben Art wie bei der Wälzschleifmaschine 1 und der Wälzschleifmaschine 101. Auch die drehbare Basis 1012 entspricht im Wesentlichen der Basis 112 aus Fig. 3A. Neben dem Trägerturm 1007 ist eine Werkstückspindel 1002 angeordnet. Am Trägerturm 1007 befindet sich ein Reitstock 1008, welcher über der Werkstückspindel 1002 liegt. Auf einer vertikalen Höhe zwischen Werkstückspindel 1002 und Reitstock 1008 umfasst der Trägerturm 1007 einen Dreifachgreifer 1014. Der Dreifachgreifer 1014 umfasst individuell unabhängig fahrbare Greiferelemente, die um eine Greiferdrehachse drehbar gelagert sind, wobei die Greiferdrehachse parallel zur Basisdrehachse verläuft, mit dieser aber nicht übereinstimmt. Der Dreifachgreifer 1014 dient dazu, Werkstücke flexibel zur Werkstückspindel 1002 hin oder von der Werkstückspindel 1002 weg zu transportieren. Ausserdem können Werkstücke so noch an Nebenbearbeitungspositionen ausserhalb der Wälzschleifmaschine 1001 gehalten werden.

Die Profiliereinrichtung 1005 mit der Profilierplatte 1006 entspricht im Wesentlichen der Profiliereinrichtung 5 mit der Profilierplatte 6 aus Fig. 1C, allerdings mit einem modifizierten proximalen Befestigungsteil. Sie ist seitlich an der Reitstockbasis des Reitstocks 1008 angeordnet.

In einer Profilierkonfiguration der Wälzschleifmaschine 1001 ist die Basis 1012 so gedreht, dass die Profilierplatte 1006 direkt zur Schleifspindel 1003 weist (siehe Fig. 5B). Die Wälzschleifmaschine 1001 kann z.B. in einem Verfahren, welches im Wesentlichen dem Verfahren 70 aus Fig. 2 entspricht, eingesetzt werden.

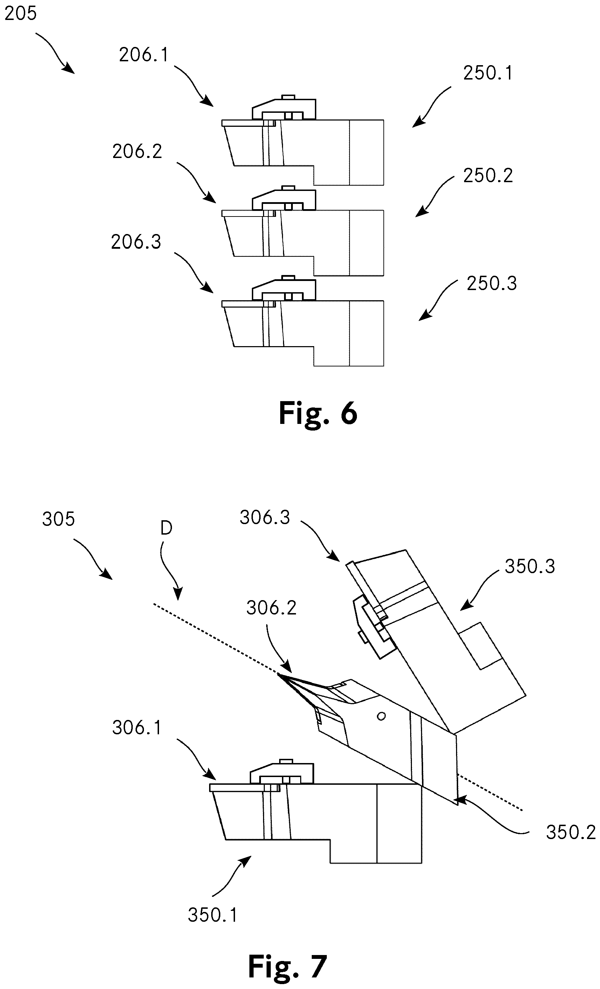

Fig. 6 zeigt eine weitere Profiliereinrichtung 205 als seitliche Draufsicht. Die Profiliereinrichtung 205 umfasst drei Profilierplatten 206.1, 206.2, 206.3, welche jeweils in einem Profilierplattenhalter 250.1, 250.2, 250.3 gehalten werden. Dabei entsprechen die Profilierplattenhalter 250.1, 250.2, 250.3 im Wesentlichen dem Profilierplattenhalter 50 aus Fig. 1C.

Die Profilierplatte 206.1 hat im Wesentlichen dieselbe Form wie die Profilierplatte 6 aus Fig. 1C. Die Profilierplatte 206.2 weist einen Profilierplattenspitzenwinkel auf, der um einen Betrag von 2° grösser ist, als der Profilierplattenspitzenwinkel von Profilierplatte 206.1. Entsprechendes gilt für Profilierplatte 206.3, bezogen auf Profilierplatte 206.2. Der proximale Bereich aller Profilierplatten 206.1, 206.2, 206.3 entspricht wiederum der Profilierplatte 6 aus Fig. 1C.

Die Profilierplatten 206.1, 206.2, 206.3 sowie die Profilierplattenhalter 250.1, 250.2, 250.3 sind entlang einer vertikalen Achse voneinander beabstandet angeordnet, während ihre horizontale Ausrichtung und Position gleich ist. Der vertikale Abstand, z. B. zwischen den Profilierplatten 206.1 und 206.2 entspricht dabei in etwa der doppelten vertikalen Dicke des Klemmfusses des Profilierplattenhalters 250.1.

Die Profiliereinrichtung 205 kann z. B. Teil einer Wälzschleifmaschine sein, die der Wälzschleifmaschine 1 im Wesentlichen entspricht. Für die jeweilige Profilierkonfiguration nimmt die Schleifspindel dann unterschiedliche Höhen entlang der Achse Z (Fig. 1A) ein und kann so selektiv zu einer der Profilierplatten 206.1, 206.2, 206.3 zugestellt werden.

Die voneinander abweichenden Profilierplattenspitzenwinkel erlauben dabei ein Profilieren von Schleifschnecken verschiedener Grösse bzw. von Schleifprofilen verschiedener Grösse und Form.

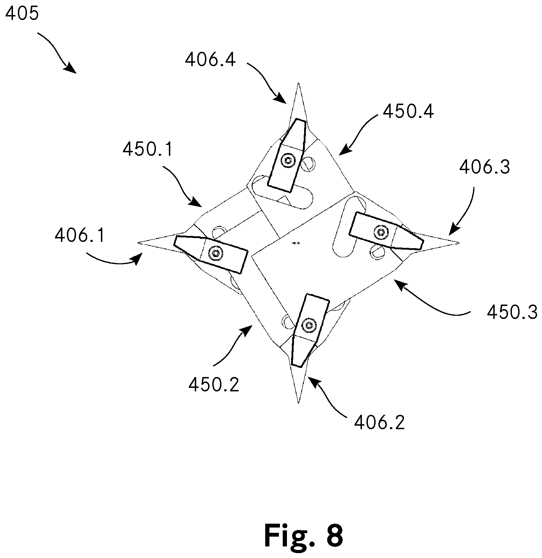

Fig. 7 zeigt eine als Revolverprofiliereinrichtung ausgebildete Profiliereinrichtung 305. Sie umfasst drei Profilierplatten 306.1, 306.2, 306.3. Diese entsprechen in ihrer distalen Spitze im Wesentlichen den Profilierplatten 206.1, 206.2, 206.3 aus Fig. 6. Anders als die Profilierplatte 6 aus Fig. 1C sind die Profilierplatten 306.1, 306.2, 306.3 symmetrisch um eine durch die jeweilige Spitze laufende Symmetrieachse angeordnet. Der proximale Bereich der Profilierplatten 306.1, 306.2, 306.3 hat die Form eines Quadrats, von dem eine Kante auf der Symmetrieachse liegt (siehe Fig. 8 mit den Profilierplatten 406.1, 406.2, 406.3, 406.4, welche die gleiche Form aufweisen). Auf der dieser Kante gegenüberliegenden Seite entspringt der pfeilförmige distale Bereich mit einer Profilierplattenspitze. Das proximale Ende der Profilierplatten 306.1, 306.2, 306.3, 306.4 setzt sich so aus zwei Seitenflächen zusammen, die in einem 90° Winkel zueinander stehen.

Die Profilierplatten 306.1, 306.2, 306.3, 306.4 werden von Profilierplattenhaltern 350.1, 350.2, 350.3 gehalten. Die Profilierplattenhalter 350.1, 350.2, 350.3 entsprechen in ihren distalen Bereichen prinzipiell dem Profilierplattenhalter 50 aus Fig. 1C und bestehen ebenfalls jeweils aus einem Klemmfuss und einem Klemmelement. Anders als der Profilierplattenhalter 50 aus Fig. 1C weisen sie am Klemmfuss allerdings zwei Stabilisierungsflächen auf, die zu der Form der Profilierplatten 306.1, 306.2, 306.3 passen.

Ein jeweiliger Befestigungsbereich der Profilierplattenhalter 350.1, 350.2, 350.3 hat im Wesentlichen eine Quaderform, wobei der Bereich mit der jeweiligen Profilierplatte 306.1, 306.2, 306.3 mittig an einer distalen Kante dieser Quaderform ausgebildet ist. In ihrer Dicke entsprechen die Profilierplattenhalter 350.1, 350.2, 350.3 der vertikalen Dicke des Profilierplattenhalters 50 aus Fig. 1C.

Die Profilierplattenhalter 350.1, 350.2, 350.3 sind so angeordnet, dass die Spitzen der Profilierplatten 306.1, 306.2, 306.3 auf einem Kreisumfang liegen. Dieser Kreisumfang befindet sich dabei auf einer Anordnungsebene, die zu einer oberen Hauptfläche der Profilierplatte 306.1 in einem inneren Winkel von in etwa 70° angewinkelt steht, wobei die Anordnungsebene orthogonal zur Spitzenrichtung der Spitze der Profilierplatte 306.1 liegt. Die Profilierplattenhalter 350.1, 350.2, 350.3 sind ausserdem so angeordnet, dass die jeweilige vom Klemmfuss wegweisende Hauptseite der Profilierplatten 306.1, 306.2, 306.3 zu einer Drehachse D weist, welche Drehachse D mittig durch den Kreisumfang und orthogonal zur Anordnungsebene steht.

Die Profiliereinrichtung 305 ist um die Drehachse D drehbar so gelagert, dass jede Profilierplatte 306.1, 306.2, 306.3 in eine horizontale Position gebracht werden kann. Die Profiliereinrichtung 305 ist z. B. an einer Wälzschleifmaschine, die der Wälzschleifmaschine 1 aus Fig. 1A und Fig. 1B entspricht, anbringbar. Sie bietet damit drei verschiedene Profilierkonfigurationen, bei denen jeweils die gewünschte Profilierplatte 306.1, 306.2, 306.3 durch eine Drehung der Profiliereinrichtung 305 um die Drehachse D in eine horizontale Lage gebracht wird.

Fig. 8 zeigt eine als Drehtischprofiliereinrichtung ausgebildete Profiliereinrichtung 405 als direkte Draufsicht. Sie umfasst vier Profilierplatten 406.1, 406.2, 406.3, 406.4, welche den Profilierplatten 306.1, 306.2, 306.3, 306.4 aus Fig. 7 entsprechen. Die Profilierplattenhalter 450.1, 450.2, 450.3, 450.4 entsprechen im Wesentlichen den Profilierplattenhaltern 350.1, 350.2, 350.3, allerdings in einer anderen Anordnung. Ausserdem befindet sich der Bereich mit der jeweiligen Profilierplatte 406.1, 406.2, 406.3, 406.4 in dieser Ausführung jeweils seitlich an einer distalen Kante der Profilierplattenhalter 450.1, 450.2, 450.3, 450.4.

Bei der Profiliereinrichtung 405 sind die Profilierplattenhalter 450.1, 450.2, 450.3, 450.4 so angeordnet, dass die Spitzen der Profilierplatten 406.1, 406.2, 406.3, 406.4, bezogen auf eine horizontale Ebene, auf einem Kreisumfang liegen und radial von dem Kreisumfang wegzeigen. Dabei sind die Profilierplatten 406.1, 406.2, 406.3, 406.4 allerdings vertikal voneinander beabstandet, da die Profilierplattenhalter 450.1, 450.2, 450.3, 450.4 aufeinander befestigt werden: Zuunterst befindet sich Profilierplattenhalter 450.1, auf dessen Oberseite der Profilierplattenhalter 450.2, der horizontal entgegen des Uhrzeigersinns um 90° gedreht, angeordnet ist. Auf der Oberseite von Profilierplattenhalter 450.2 befindet sich, wieder um 90° im Uhrzeigersinn gedreht, der Profilierplattenhalter 450.3 und wieder darüber und wieder um 90° gedreht der Profilierplattenhalter450.4. Die Profiliereinrichtung 405 ist dabei drehbar um eine Achse gelagert, die mittig durch den beschriebenen Kreis und orthogonal aus der Bildebene tritt.

Die Profiliereinrichtung 405 kann an einer Wälzschleifmaschine wie z. B. Wälzschleifmaschine 1 aus Fig. 1A und Fig. 1B eingesetzt werden. Zum Annehmen der verschiedenen Profilierkonfigurationen wird die Drehtischprofiliereinrichtung 405 so um ihre Drehachse gedreht, dass die gewünschte Profiliereinrichtung zur Schleifspindel der Wälzschleifmaschine weist.

Die Erfindung ist nicht auf die dargestellten Ausführungsbeispiele beschränkt. Die dargestellten Wälzschleifmaschinen können anders ausgeformt sein. Sie können z.B. mehrere Trägertürme umfassen oder auch gar keinen. Die Trägertürme können auch fest, also nicht drehbar, auf dem Maschinenbett angeordnet sein. Auch können die Schleifwerkzeuge grössere oder kleinere Durchmesser aufweisen. Die Anzahl an Werkstückspindeln kann variieren, so können z. B. auch drei Werkstückspindeln an der Wälzschleifmaschine vorhanden sein. Die Bewegung, insbesondere die Zu- und Rückstellung der Schleifspindel, kann anders realisiert sein, z.B. mit einem ebenso zustellbaren Shiftschlitten. Die Profilierplatten können eine andere als die dargestellte Form aufweisen, insbesondere z. B. eine einfache Dreiecksform, eine Sternform, oder eine Form mit einer abgerundeten Spitze. Die gezeigten Profilierplattenhalter können andere Formen aufweisen. Es kann z.B. ein Profilierplattenhalter mehrere Profilierplatten halten. Auch können die Profilierplatten z. B. von zwei Klemmfüssen in einer Sandwich-Anordnung eingeklemmt sein. Die Rundtischprofiliereinrichtung kann auch so realisiert sein, dass alle Profilierplatten ein einer gemeinsamen Ebene liegen. Eine Revolverprofiliereinrichtung könnte auch so realisiert sein, dass die Drehachse parallel zu den Hauptflächen der Profilierplatten verläuft und alle Profilierplatten in dieselbe Richtung weisen.

Die Verfahren können von den aufgezeigten Beispielen abweichen. So kann die die Vermessung der Profilierplatte vor dem Bereitstellen des Schleifwerkzeugrohlings geschehen. Es könnte auch jeweils nur eine Vermessung nach jedem Vorprofiliervorgang oder nach einer gewissen Anzahl an Vorprofiliervorgängen durchgeführt werden. Ebenfalls kann der digitale Zwilling zu einem anderen Zeitpunkt initiiert werden, auch z. B. erst nach dem Einnehmen der Profilierkonfiguration.

Auch könnte die Simulation des Profiliervorgangs schon vor der Vorprofilierung erfolgen, z. B. auf Basis der vorher berechneten Eingabewerte und nicht auf Basis von tatsächlich aufgenommenen Bewegungsdaten. Ein Schleifwerkzeug kann öfter oder weniger oft entlang der Achse Y an der Profilierplatte vorbeifahren. Es ist auch möglich, dass die Schleifeinrichtung nach einer Durchfahrt um eine horizontale Achse, die orthogonal zur Schleifspindelrotationsachse steht, gedreht wird und anschliessend an der Profilierplatte in entgegengesetzter Richtung entlang der Achse Y vorbeifährt.

Zusammenfassend ist festzustellen, dass ein Verfahren und eine Vorrichtung geschaffen werden, die sowohl die Hartfeinbearbeitung von Werkstücken als auch eine Vorprofilierung von Schleifwerkzeugen erlauben.

## Patentansprüche

1. Verfahren zur Vorprofilierung eines Schleifwerkzeugs, umfassend die Schritte
a) Bereitstellen einer Vorrichtung, insbesondere einer Verzahnungsschleifmaschine, zur Hartfeinbearbeitung von Werkstücken sowie zur Vorprofilierung von Schleifwerkzeugen umfassend:
a. eine Werkstückspindel zum Rotieren eines Werkstücks;
b. eine mindestens entlang einer X-Schleifspindelzustellachse zustellbare Schleifspindel zum Rotieren eines Schleifwerkzeugs, insbesondere einer Schleifschnecke oder einer Schleifscheibe;
c. eine Profiliereinrichtung mit einer stehenden ersten Profilierplatte,
b) Bereitstellen eines Schleifwerkzeugrohlings, insbesondere eines Schleifschneckenrohlings, an der Schleifspindel der Vorrichtung;
c) Bringen der Vorrichtung in eine Profilierkonfiguration;
d) Zustellen der Schleifspindel bis der Schleifwerkzeugrohling mit der ersten Profilierplatte in Wirkverbindung steht;
e) Vorprofilieren des Schleifwerkzeugrohlings.

2. Verfahren nach Anspruch 1, **dadurch gekennzeichnet, dass** das Bringen der Vorrichtung in die Profilierkonfiguration ein Bewegen der ersten Profilierplatte, insbesondere ein Schwenken der ersten Profilierplatte, entlang einer Kreisbahn in eine Schleifwerkzeugbearbeitungsposition umfasst.

3. Verfahren nach Anspruch 1 oder 2, **dadurch gekennzeichnet, dass** das Bringen der Vorrichtung in die Profilierkonfiguration ein Bewegen der Schleifspindel entlang einer Z-Schleifspindelachse, welche parallel zu einer Werkstückrotationsachse verläuft, in eine Schleifspindelprofilierhöhe umfasst.

4. Verfahren nach einem der Ansprüche 1 bis 3, wobei die erste Profilierplatte nach Beendigung des Vorprofilierens in eine Warteposition bewegt wird, in der die erste Profilierplatte sich ausserhalb eines Zustellbereichs zwischen der Schleifspindel und der Werkstückspindel befindet.

5. Verfahren nach einem der Ansprüche 1 bis 4, **dadurch gekennzeichnet, dass** während des Vorprofilierens die Schleifspindel in einem Y-Wirkverbindungsbewegungsbereich, innerhalb dessen der auf der Schleifspindel befindliche Schleifwerkzeugrohling in Wirkverbindung mit der ersten Profilierplatte verbleibt, entlang einer Y-Schleifspindelachse bewegt wird, welche Y-Schleifspindelachse parallel zu einer Schleifspindelrotationsachse der Schleifspindel verläuft.

6. Verfahren nach einem der Ansprüche 1 bis 5, **dadurch gekennzeichnet, dass** während des Vorprofilierens ein Klemmfuss eines Profilierplattenhalters eine Seite der ersten Profilierplatte berührt und stützt, welche Seite im Wesentlichen eine Flächennormale aufweist, die in eine selbe Richtung weist wie die Rotationsrichtung des Schleifwerkzeugrohlings in einer lokalen Wirkverbindungsregion von Schleifwerkzeugrohling und Profilierplatte.

7. Verfahren nach einem der Ansprüche 1 bis 6, **dadurch gekennzeichnet, dass** vor dem Bringen der Vorrichtung in eine Profilierkonfiguration eine Vermessung der ersten Profilierplatte durchgeführt wird, wobei für die Vermessung die erste Profilierplatte mit einem Taster, insbesondere nacheinander an mindestens zwei Berührungspunkten der Profilierplatte, in Berührung gebracht wird.

8. Verfahren nach Anspruch 7, **dadurch gekennzeichnet, dass** vor der Vermessung der ersten Profilierplatte der Taster zur Profiliereinrichtung zugestellt wird, bis sich Taster und erste Profilierplatte berühren.

9. Vorrichtung, insbesondere Verzahnungsschleifmaschine, zur Hartfeinbearbeitung von Werkstücken sowie zur Profilierung von Schleifwerkzeugen, insbesondere mit einem Verfahren nach einem der vorhergehenden Ansprüche, umfassend:
a) eine Werkstückspindel zum Rotieren eines Werkstücks;
b) eine, mindestens entlang einer X-Schleifspindelzustellachse zustellbare Schleifspindel zum Rotieren eines Schleifwerkzeugs, insbesondere einer Schleifschnecke oder einer Schleifscheibe,
- wobei die Vorrichtung eine Werkstückbearbeitungskonfiguration hat, bei der die Schleifspindel entlang der X-Schleifspindelzustellachse zur Werkstückspindel zustellbar ist, bis ein auf der Schleifspindel befindliches Schleifwerkzeug mit einem auf der Werkstückspindel befindlichen Werkstück in Wirkverbindung steht;
c) eine Profiliereinrichtung, umfassend eine stehende erste Profilierplatte, wobei
- die Vorrichtung eine erste Profilierkonfiguration hat, bei der die Schleifspindel zur Profiliereinrichtung zustellbar ist, bis das auf der Schleifspindel befindliche Schleifwerkzeug mit der ersten Profilierplatte in Wirkverbindung steht.

10. Vorrichtung nach Anspruch 9, **dadurch gekennzeichnet, dass** die erste Profilierplatte in eine Warteposition bewegbar, insbesondere schwenkbar, ist, in der die erste Profilierplatte sich ausserhalb eines Zustellbereichs entlang der X-Schleifspindelzustellachse zwischen der Schleifspindel und der Werkstückspindel befindet.

11. Vorrichtung nach Anspruch 9 oder 10, **dadurch gekennzeichnet, dass** die Profiliereinrichtung einen schwenkbar gelagerten Schwenkarm umfasst, wobei die erste Profilierplatte an einem distalen Ende des Schwenkarms angeordnet ist.

12. Vorrichtung nach einem der Ansprüche 9 bis 11, **dadurch gekennzeichnet, dass** die Schleifspindel entlang einer Y-Schleifspindelachse bewegbar ist, welche Y-Schleifspindelachse parallel zu einer Schleifspindelrotationsachse der Schleifspindel, und insbesondere orthogonal zur X-Schleifspindelzustellachse, verläuft, wobei in der ersten Profilierkonfiguration ein Y-Wirkverbindungsbewegungsbereich existiert, innerhalb dessen sich ein auf der Schleifspindel befindliches Schleifwerkzeug in Wirkverbindung mit der ersten Profilierplatte befindet.

13. Vorrichtung nach einem der Ansprüche 9 bis 12, **dadurch gekennzeichnet, dass** die Schleifspindel entlang einer Z-Schleifspindelachse bewegbar ist, welche Z-Schleifspindelachse parallel zu einer Werkstückrotationsachse der Werkstückspindel, und insbesondere orthogonal zur X-Schleifspindelzustellachse, verläuft, wobei die Schleifspindel entlang der Z-Schleifspindelachse in der Werkstückbearbeitungskonfiguration eine Schleifspindelprofilierhöhe annimmt.

14. Vorrichtung nach einem der Ansprüche 9 bis 13, **dadurch gekennzeichnet, dass** die Vorrichtung einen, insbesondere drehbar gelagerten, Trägerturm umfasst, wobei der Trägerturm insbesondere einen Werkstückträger zum Transport eines Werkstücks zur Werkstückspindel aufweist.

15. Vorrichtung nach Anspruch 14, **dadurch gekennzeichnet, dass** die Profiliereinrichtung am Trägerturm angeordnet ist.

16. Vorrichtung nach Anspruch 15, **dadurch gekennzeichnet, dass** der Trägerturm und die Werkstückspindel auf einer drehbaren Basis angeordnet sind, wobei die Profiliereinrichtung, bezogen auf eine Basisdrehachse, in einem Winkelbereich ausserhalb eines Werkstückspindelwinkelbereichs am Trägerturm angeordnet ist.

17. Vorrichtung nach Anspruch 14, weiter umfassend eine am Trägerturm angeordnete Abrichteinrichtung, wobei die Profiliereinrichtung an der Abrichteinrichtung angeordnet ist.

18. Vorrichtung nach Anspruch 15, weiter umfassend einen am Trägerturm angeordneten Werkstückreitstock mit einer Reitstockbasis, wobei die Profiliereinrichtung an der Reitstockbasis angeordnet ist.

19. Vorrichtung nach einem der Ansprüche 9 bis 18, **dadurch gekennzeichnet, dass** die erste Profilierplatte ein Schneidelement aus polykristallinem Diamanten umfasst.

20. Vorrichtung nach einem der Ansprüche 9 bis 19, **dadurch gekennzeichnet, dass** die erste Profilierplatte einen ersten distalen Profilierplattenspitzenwinkel von 1° bis 50°, insbesondere von 5° bis 45°, besonders bevorzugt von 10° bis 30°, aufweist.

21. Vorrichtung nach einem der Ansprüche 9 bis 20, **dadurch gekennzeichnet, dass** die Profiliereinrichtung einen ersten Profilierplattenhalter aufweist, welcher die erste Profilierplatte hält, umfassend
a) einen ersten Klemmfuss, wobei der erste Klemmfuss eine erste Aufnahmefläche aufweist, welche erste Aufnahmefläche in Berührung mit der ersten Profilierplatte steht,
b) ein erstes Klemmelement, welches die erste Profilierplatte auf die erste Aufnahmefläche drückt.

22. Vorrichtung nach Anspruch 21, **dadurch gekennzeichnet, dass** ein erstes Aufnahmeflächenmass der ersten Aufnahmefläche zwischen 50 % und 95% eines ersten Profilierplattenhauptflächenmasses der ersten Profilierplatte aufweist.

23. Vorrichtung nach Anspruch 21 oder 22, **dadurch gekennzeichnet, dass** der erste Klemmfuss eine Dicke senkrecht zur ersten Aufnahmefläche aufweist, die mindestens 70%, insbesondere mindestens 100%, einer maximalen Länge der Aufnahmefläche entspricht.

24. Vorrichtung nach einem der Ansprüche 21 bis 23, **dadurch gekennzeichnet, dass** der erste Klemmfuss angrenzend an die erste Aufnahmefläche, insbesondere senkrecht zur ersten Aufnahmefläche, mindestens eine erste Stabilisierungsfläche aufweist, die die erste Profilierplatte gegen ein Verrutschen innerhalb des ersten Profilierplattenhalters abstützt.

25. Vorrichtung nach einem der Ansprüche 9 bis 24, **dadurch gekennzeichnet, dass** die Profiliereinrichtung eine zweite Profilierplatte, insbesondere auch eine dritte Profilierplatte, bevorzugt auch eine vierte Profilierplatte, umfasst.

26. Vorrichtung nach Anspruch 25, **dadurch gekennzeichnet, dass** die Profilierplatten der Profiliereinrichtung einen ersten Profilierplattenspitzenwinkel der ersten Profilierplatte und einen zweiten Profilierplattenspitzenwinkel der zweiten Profilierplatte, insbesondere auch einen dritten Profilierplattenspitzenwinkel der dritten Profilierplatte, besonders bevorzugt auch einen vierten Profilierplattenspitzenwinkel der vierten Profilierplatte, aufweisen, wobei die Profilierplattenspitzenwinkel jeweils zueinander eine Differenz von mindestens 2°, insbesondere mindestens 3°, aufweisen.

27. Vorrichtung nach Anspruch 25 oder 26, **dadurch gekennzeichnet, dass** eine erste distale Profilierplattenspitze der ersten Profilierplatte und eine zweite distale Profilierplattenspitze der zweiten Profilierplatte, insbesondere auch eine dritte distale Profilierplattenspitze der dritten Profilierplatte, bevorzugt auch eine vierte distale Profilierplattenspitze der vierten Profilierplatte, bezogen auf eine Anordnungsebene auf einem Kreisumfang angeordnet sind, wobei die Profiliereinrichtung um eine, zur Anordnungsebene orthogonal und mittig durch den Kreisumfang verlaufende Umsetzachse schwenkbar oder drehbar gelagert ist, so dass jede Profilierplattenspitze zur Schleifspindel ausrichtbar ist, wobei die Anordnungsebene entweder parallel, insbesondere als Rundtischanordnung, oder angewinkelt, insbesondere als Revolveranordnung, zu einer Hauptfläche der ersten Profilierplatte verläuft.

28. Vorrichtung nach einem der Ansprüche 25 oder 26, **dadurch gekennzeichnet, dass** die Profiliereinrichtung eine Stapelprofiliereinrichtung ist, wobei eine erste distale Profilierplattenspitze der ersten Profilierplatte und eine zweite distale Profilierplattenspitze der zweiten Profilierplatte, insbesondere auch eine dritte distale Profilierplattenspitze der dritten Profilierplatte, bevorzugt auch eine vierte distale Profilierplattenspitze der vierten Profilierplatte, entlang einer Stapelachse, die orthogonal zu einer Hauptfläche der ersten Profilierplatte verläuft, voneinander beabstandet sind und bezogen auf eine Ebene, die parallel zur Hauptfläche der ersten Profilierplatte verläuft, gleich ausgerichtet sind.

29. Vorrichtung nach einem der Anspruch 9 bis 28, umfassend einen Taster, wobei die Vorrichtung eine erste Profilierplattenvermesskonfiguration hat, bei der der Taster zur Profiliereinrichtung zustellbar ist, bis der Taster sich mit der ersten Profilierplatte in Berührung befindet.
